# EUROPÄISCHE PATENTSCHRIFT

(11) **EP 3 076 111 B1**
(45) Veröffentlichungstag und Bekanntmachung des Hinweises auf die Patenterteilung: **09.12.2020**
(21) Anmeldenummer: 16155294.8
(22) Anmeldetag: 11.02.2016
(51) Int. Cl.: F25D 17/02, F25B 25/00

(54) **FLUIDSYSTEM UND VERFAHREN ZUM STEUERN EINES FLUIDSYSTEMS**
FLUID SYSTEM AND METHOD FOR CONTROLLING A FLUID SYSTEM
SYSTÈME FLUIDIQUE ET PROCÉDÉ DE COMMANDE D'UN SYSTÈME FLUIDIQUE

(30) Priorität: 30.03.2015 DE 102015104901; 20.10.2015 DE 102015117848
(43) Veröffentlichungstag der Anmeldung: 05.10.2016
(73) Patentinhaber: Viessmann Refrigeration Solutions GmbH, 35108 Allendorf (DE)
(72) Erfinder: Brockmann, Robert, 60316 Frankfurt (DE); Geitz, Benedikt, 35088 Battenberg (DE); Vaupel, Manfred, 35066 Frankenberg (DE); Neumeier, Markus, 34454 Bad Arolsen (DE)
(74) Vertreter: Sperschneider, Alexandra

(56) Entgegenhaltungen:
- EP-A1- 0 872 788
- EP-A2- 1 154 205
- WO-A1-2013/128778
- AT-A2- 506 376
- DE-A1- 1 807 916
- DE-A1- 3 123 875
- DE-A1- 19 506 628
- DE-A1-102009 011 715
- DE-C1- 19 938 725

## Beschreibung

Es werden ein Fluidsystem und ein Verfahren zum Steuern eines Fluidsystems beschrieben. Fluidsysteme werden bspw. zum Heizen und/oder Kühlen von Gebäuden oder Anlagen verwendet.

Bei diesen Fluidsystemen wird von einer zentralen Heiz- oder Kühlquelle ein Fluid auf eine bestimmte Temperatur gebracht und das Fluid über Leitungen zu Verbrauchern geführt, die ein Kühlen oder Erwärmen durch Wärmeabgabe oder Wärmeaufnahme über das Fluid bereitstellen. In der Regel ist dazu eine zentrale Förder- oder Umwälzpumpe in einem solchen Kreislauf angeordnet. Die Förder- oder Umwälzpumpe dient zur Zufuhr des Fluids zu den Verbrauchern und zur Rückführung des Fluids zur Heiz- oder Kühlquelle. Die Zuführ- und Abführwege des Fluids können mitunter unterschiedlich lang sein, sodass es neben einem Druckabfall für weit entfernte Verbraucher auch zu einem Temperaturanstieg oder -abfall des Fluids über die Zuführleitung hinweg kommen kann. Dies kann durch eine Änderung der Drehzahl der Förder- oder Umwälzpumpe oder durch eine Temperaturänderung des Fluids kompensiert werden, wobei hierdurch das Problem entsteht, dass nahe an der Heiz- oder Kühlquelle angeordnete Verbraucher mit einem zu hohen Druck oder einer zu hohen bzw. niedrigen Temperatur des Fluids versorgt werden. Um dies zu verhindern, sind aus dem Stand der Technik Regelventile oder dezentrale Pumpen vorgesehen. Ein solches System ist bspw. in DE 10 2013 004 106 A1 beschrieben.

Ein Verfahren und eine Vorrichtung zur Vereinfachung des hydraulischen Abgleichs von Fluid durchströmten Leitungsnetzen werden in DE 10 2012 023 848 A1 beschrieben. In einem solchen Leitungsnetz wird ein Messen von Kennwerten für eine Vielzahl von parallel in das Leitungsnetz eingebundenen Verbrauchern durchgeführt. In Abhängigkeit der ermittelten Kennwerte kann anschließend eine Leistungsanpassung eines Erzeugers durchgeführt werden.

Nachteilig bei den aus dem Stand der Technik bekannten Systemen ist zum einen der komplexe Aufbau. Hierbei muss eine Vielzahl von Vorrichtungen (Messsysteme, Regelventile etc.) vorgesehen sein, um einen Abgleich vorzunehmen. Insbesondere weisen solche Systeme Nachteile im Hinblick auf Schwankungen auf einer Erzeuger- oder Abnehmerseite auf. Bei den Systemen erfolgt ein ständiges Messen der Zustandsgrößen, wobei in Abhängigkeit der Messergebnisse die Heiz- oder Kühlleistung einer Heiz- bzw. Kühlvorrichtung verändert werden. Ein weiteres Problem besteht für bekannte Systeme in der Erzeugereinrichtung (Heiz- oder Kühlquelle), insbesondere dann wenn eine Wärmepumpe verwendet werden soll. Bei Wärmepumpen ist ein häufiges An- und Ausschalten (Takten) nachteilig. Bei Systemen mit unterschiedlichen Anforderungen durch die Verbraucher an einen Erzeuger (Wärmepumpe) kommt es jedoch häufig zu einem Takten. Wärmepumpen weisen in der Regel zwei Zustände auf, nämlich einen eingeschalteten und einen ausgeschalteten Zustand. Vorzugsweise sollten die Ein- und Ausschaltvorgänge bei Wärmepumpen gering gehalten werden. In einem System mit Schwankungen im Verbraucherfluidkreislauf gestaltet sich daher eine Reduzierung des Taktens der Wärmepumpen als äußert schwierig. In der Regel ist es nicht möglich, ein häufiges Takten zu vermeiden.

Es ist daher Aufgabe, ein Fluidsystem sowie ein Verfahren zum Steuern eines Fluidsystems anzugeben, bei welchem Wärmepumpen als Erzeuger optimiert betrieben werden können, indem die Ein- und Ausschaltvorgänge reduziert sind, und ein hydraulischer Abgleich erzielt wird.

Die Aufgabe wird durch ein Verfahren mit den in Anspruch 1 angegebenen technischen Merkmalen und durch ein Fluidsystem mit den in Anspruch 6 angegebenen technischen Merkmalen gelöst. Vorteilhafte Weiterbildungen sind in den Unteransprüchen im Detail angegeben.

Bei einem Verfahren zur Steuerung eines Fluidsystems, welches die vorstehend genannte Aufgabe löst, aufweisend einen Erzeugerfluidkreislauf und einen Verbraucherfluidkreislauf, wobei zwischen dem Erzeugerfluidkreislauf und dem Verbrauchfluidkreislauf eine hydraulische Weiche oder ein hydraulischer Behälter als Weiche angeordnet sind, wobei die hydraulische Weiche oder der hydraulische Behälter mit einer Zuführleitung und einer Rückleitung des Erzeugerfluidkreislaufs und einer Zuführleitung und einer Rückführleitung des Verbraucherfluidkreislaufs verbunden sind, der Erzeugerfluidkreislauf mindestens eine Wärmepumpe und mindestens eine Förderpumpe und der Verbraucherfluidkreislauf mindestens eine Kühlvorrichtung sowie mindestens eine Ausgleichspumpe aufweisen, wird die mindestens eine Ausgleichspumpe so gesteuert, dass der Massestrom des Verbraucherfluidkreislaufs bei einer hydraulischen Weiche oder bei einem hydraulischen Behälter im nicht vollständig beladenen Zustand des hydraulischen Behälters kleiner oder gleich dem Massestrom des Erzeugerfluidkreislaufs ist und/oder das Massestromverhältnis zwischen dem Erzeugerfluidkreislauf und dem Verbraucherfluidkreislauf in der hydraulischen Weiche oder in dem hydraulischen Behälter konstant gehalten werden.

Bei dem Verfahren wird das Massestromverhältnis in der hydraulischen Weiche oder dem hydraulischen Behälter so gesteuert, dass der Massestrom des Verbraucherfluidkreislaufs kleiner oder gleich dem Massestrom des Erzeugerfluidkreislaufs ist. Dabei wird das Massestromverhältnis über die mindestens eine Ausgleichspumpe konstant gehalten. Über die hydraulische Weiche oder den hydraulischen Behälter ergibt sich eine Entkopplung des Verbraucherfluidkreislaufs von dem Erzeugerfluidfluidkreislauf. Daher ist es möglich, die Abstände zwischen den Einschalt- und Ausschaltzeitpunkten der mindestens einen Wärmepumpe durch eine entsprechende Regelung der Ausgleichspumpe zu verlängern. Ein weiterer Vorteil ergibt sich darin, dass über das Volumen in den Rohrleitungen des Verbraucherfluidkreislaufs "Kälte" gespeichert werden kann. Ist der hydraulische Behälter im Wesentlichen vollständig beladen und die "Kälte" zum Kühlen des Fluids wird dem hydraulischen Behälter entnommen, kann das Massestromverhältnis zwischen Verbraucherfluidkreislauf und Erzeugerfluidkreislauf umgekehrt werden. Insbesondere gibt es für das Fluidsystem daher zwei unterschiedliche Betriebsarten, nämlich einen normalen Kühlbetrieb, in dem der Massestrom des Verbraucherfluidkreislaufs kleiner oder gleich dem Massestrom des Erzeugerfluidkreislaufs ist, und einen Speicher-Kühlbetrieb, in dem der Massestrom im Verbraucherfluidkreislauf größer oder gleich dem Massestrom des Erzeugerfluidkreislaufs ist, wobei ein Speicher-Kühlbetrieb in der Regel dann gewählt wird, wenn der hydraulische Behälter im Wesentlichen vollständig beladen ist.

Der Erzeugerfluidkreislauf und der Verbraucherfluidkreislauf weisen jeweils mindestens eine Zuführ- und eine Rückführleitung auf. An die Zuführ- und Rückführleitungen des Erzeugerfluidkreislaufs und des Verbraucherfluidkreislaufs schließen sich parallele Nebenkreisläufe an, wobei die Zuführ- und Rückführleitungen der Nebenkreisläufe entsprechend mit den Zuführ- und Rückführleitungen der zugehörigen Hauptkreisläufe verbunden sind. Das Fluidsystem weist hierzu Rohrsysteme auf, in welchen das Fluid geführt wird. Als Fluid für das Fluidsystem wird Wasser mit einem Frostzusatz (Kältemittel), wie z.B. eine Sole verwendet. Die Sole kann dabei eine Wasser-Glykol-Mischung sein.

Die hydraulische Weiche oder der hydraulische Behälter weisen einen mit der Rückführleitung des Erzeugerfluidkreislaufs verbundenen Anschluss für Fluid auf, das von der Wärmepumpe der hydraulischen Weiche oder dem hydraulischen Behälter zugeführt wird. Die hydraulische Weiche oder der hydraulische Behälter weisen einen mit der Zuführleitung des Erzeugerfluidkreislaufs verbundenen Anschluss für Fluid auf, das von der hydraulischen Weiche oder dem hydraulischen Behälter der Wärmepumpe zugeführt wird. Die hydraulische Weiche oder der hydraulische Behälter weisen einen mit der Zuführleitung des Verbraucherfluidkreislaufs verbundenen Anschluss für Fluid auf, das von der hydraulischen Weiche oder dem hydraulischen Behälter in den Verbraucherfluidkreislauf eingebracht und der mindestens einen Kühlvorrichtung zugeführt wird. Zudem weisen die hydraulische Weiche oder der hydraulische Behälter einen mit der Rückführleitung des Verbraucherfluidkreislaufs verbundenen Anschluss für Fluid auf, das von der mindestens einen Kühlvorrichtung der hydraulischen Weiche oder dem hydraulischen Behälter zugeführt wird.

Bei einem Fluidsystem mit nur einer Kühlvorrichtung und/oder relativ geringen Leitungslängen, insbesondere im Verbraucherfluidkreislauf, ist eine Ausgleichspumpe für die Einstellung des Massestromverhältnisses in der hydraulischen Weiche oder dem hydraulischen Behälter und für die Zufuhr des Fluids zu der Kühlvorrichtung ausreichend. Es können auch mehrere Ausgleichspumpen vorgesehen sein, die an verschiedenen Positionen des Verbraucherfluidkreislaufs angeordnet sind. Die mindestens eine Ausgleichspumpe ist als zentrale Pumpe vorzugsweise zwischen der Zuführleitung und der Rückführleitung des Verbraucherfluidkreislaufs angeordnet. Weist das Fluidsystem mehrere Kühlvorrichtungen auf, sind diese über die vorstehend genannten parallelen Nebenkreisläufe in dem Verbraucherfluidkreislauf angeordnet. Die Nebenkreisläufe weisen jeweils mindestens eine Kühlvorrichtung und eine Pumpe zur Zufuhr des Fluids zu der Kühlvorrichtung auf. Die Pumpe regelt die Zufuhr des Fluids unabhängig von der Zufuhr des Fluids in der Zuführleitung des Verbraucherfluidhauptkreislaufs. Die Pumpen sind als dezentrale Pumpen in dem Verbraucherfluidkreislauf angeordnet. Die mindestens eine Ausgleichspumpe im Verbraucherfluidhauptkreislauf kann dann in Abhängigkeit des Kühlbedarfs der Kühlvorrichtungen geregelt werden, wobei der Gesamtmassestrom im Verbraucherfluidkreislauf konstant gehalten wird. Hierzu können die mindestens eine Ausgleichspumpe und die Pumpen der Kühlvorrichtungen drehzahlgesteuerte Pumpen sein. Wird die Drehzahl der Pumpen für die Kühlvorrichtungen erhöht, um eine höhere Kühlleistung über die Kühlvorrichtungen bereitzustellen, wird entsprechend die Drehzahl der mindestens einen Ausgleichspumpe reduziert, wobei die Drehzahl der Art eingeregelt wird, dass die Temperaturspreizung zwischen dem Vorlauf (Zuführleitung Verbraucherfluidkreislauf) und Rücklauf (Rückführleitung Verbraucherfluidkreislauf) des Verbraucherfluid(haupt)kreislaufs im Mittel bei 4 Kelvin liegt. Des Weiteren wird die Drehzahl so geregelt, dass bei Unterschreiten einer Temperaturspreizung von 2,5 Kelvin (+/- 0,5 Kelvin), die Wärmepumpe außerbetrieb gesetzt wird.

Im Idealfall ist der Massestrom im Verbraucherfluidkreislauf so groß wie im Erzeugerfluidkreislauf. Dann kommt es zu einer Durchströmung der hydraulischen Weiche oder des hydraulischen Behälters ohne Rückführung des Fluids vom Verbraucherfluidkreislauf in den Verbraucherfluidkreislauf oder vom Erzeugerfluidkreislauf in den Erzeugerfluidkreislauf.

Da es aufgrund der variablen Anforderungen der Kühlvorrichtungen zu einem unterschiedlich großen Kühlbedarf kommen kann, wird das Massestromverhältnis in der hydraulischen Weiche von Verbraucherfluidkreislauf zu Erzeugerfluidkreislauf in der Regel zwischen 1:1 und 1:1,3 eingestellt. Bei bestimmten Zuständen wird dann Fluid von der Rückführleitung des Erzeugerfluidkreislaufs über die hydraulische Weiche der Zuführleitung des Erzeugerfluidkreislaufs zugeführt. Damit wird jedoch sichergestellt, dass die Fluidtemperatur in der Zuführleitung des Verbraucherfluidkreislaufs nicht erhöht wird. Eine Rückführung von Fluid von der Rückführleitung des Verbraucherfluidkreislaufs über die hydraulische Weiche in die Zuführleitung des Verbraucherfluidkreislaufs wird damit grundsätzlich vermieden.

Der als Weiche ausgebildete hydraulische Behälter ist in weiteren Ausführungen ein hydraulischer Speicher bzw. ein Fluidspeicher. In dem Fluidspeicher kann gegenüber einer hydraulischen Weiche eine relativ große Menge an Fluid aufgenommen werden. Im Fluidspeicher stellt sich dabei eine Schichtung ein, wobei sich kaltes Fluid im unteren Bereich des Fluidspeichers und warmes Fluid im oberen Bereich des Fluidspeichers befindet. In Abhängigkeit der Fluidtemperatur weisen die verschiedenen Schichten im Fluidspeicher verschiedenen Temperaturniveaus auf. Wird der als Weiche ausgebildete hydraulische Behälter bzw. Fluidspeicher derart durchströmt, dass der Massenstrom im Erzeugerfluidkreislauf gleich groß wie der Massenstrom im Verbraucherfluidkreislauf ist, bleibt die Schichtung erhalten. Damit es nicht zu einer starken Durchmischung des in dem hydraulischen Behälter bzw. Fluidspeicher aufgenommenen Fluids und damit zu einer Zerstörung der Schichtung kommt, wird bei einem Fluidsystem mit einem als Weiche ausgebildeten hydraulischen Behälter das Massenstromverhältnis im hydraulischen Behälter der Art eingestellt, dass die Schichtung im hydraulischen Behälter nicht durch das Massenstromverhältnis zerstört wird. Grund hierfür ist, dass bei einem zu hohen Massenstromverhältnis kaltes einströmendes Fluid mit wärmeren Fluid im hydraulischen Behälter durchmischt wird, so dass die nutzbare Kälte für den Verbraucherfluidkreislauf vernichtet wird. Ein Richtwert für das Massenstromverhältnis liegt gleichfalls zwischen 1:1 und 1:1,3, wobei das maximal zulässige Massenstromverhältnis aber primär dadurch bestimmt wird, ab welchem Massenstromverhältnis die Schichtung im hydraulischen Behälter zerstört wird. Anhaltspunkt bildet hier der Erfahrungswert, dass die Fluidströmung (bezogen auf die Strömung im Behälter) nicht höher als 0,3 m/s sein darf.

Bei größeren Fluidsystemen sind mindestens zwei parallel in den Erzeugerfluidkreislauf angeordnete Wärmepumpen vorgesehen. Bspw. können zwei Wärmepumpen gleichzeitig oder nur eine Wärmepumpe zum Kühlen des Fluids betrieben werden. Es kann eine von zwei Wärmepumpen zur Grundversorgung, d.h. zum Herabsetzen der Fluidtemperatur, dauerhaft in Betrieb sein. Die mindestens eine Förderpumpe des Erzeugerfluidkreislaufs führt dann das Fluid zur hydraulischen Weiche oder dem hydraulischen Behälter, von der oder von dem aus das Fluid den Kühlvorrichtungen zugeführt und über die Ausgleichspumpe und die Rückführleitung des Verbraucherfluidkreislaufs der hydraulischen Weiche oder dem hydraulischen Behälter wieder zugeführt wird. Von der hydraulischen Weiche oder dem hydraulischen Behälter gelangt das Fluid zu der einen sich in Betrieb befindlichen Wärmepumpe, wobei ein Kühlen des Fluids erfolgt. Bleibt der Kühlbedarf der Kühlvorrichtungen im Wesentlichen konstant oder unterliegt keinen großen Schwankungen, wird der Betrieb der einen Wärmepumpe aufrechterhalten. Kommt es zu einem höheren Kühlbedarf werden die Pumpen der Kühlvorrichtungen entsprechend geregelt, wodurch die Ausgleichspumpe die Schwankung zur Aufrechterhaltung des Massestroms im Verbraucherfluidkreislauf und zur Aufrechterhaltung des Massestromverhältnisses in der hydraulischen Weiche oder dem hydraulischen Behälter ausgleicht. Bei einem höheren Kühlbedarf kann es zu einem Anstieg der Fluidtemperatur in der Rückführleitung des Verbraucherfluidkreislaufs und in der Zuführleitung des Erzeugerfluidkreislaufs kommen. Ebenso kann es zu einem Anstieg der Fluidtemperatur in der Rückführleitung des Erzeugerfluidkreislaufs und in der Zuführleitung des Verbraucherfluidkreislaufs kommen, da die Kühlleistung der einen Wärmepumpe nicht ausreicht. Insbesondere kommt es zu einem Anstieg der Temperaturdifferenz zwischen der Zuführleitung und der Rückführleitung im Verbraucherfluidkreislauf. Anstelle die Förderleistung der Förderpumpe im Erzeugerfluidkreislauf zu erhöhen, wird die zweite Wärmepumpe in Betrieb gesetzt. Die zweite Wärmepumpe kühlt dann zusätzlich das Fluid, bis die ursprünglich vorgesehene und eingestellte Fluidtemperatur in der Zuführleitung des Verbraucherfluidkreislaufs wieder erreicht ist. Zudem wird die Fluidtemperatur in der Rückführleitung des Verbraucherfluidkreislaufs und der Zuführleitung des Erzeugerfluidkreislaufs herabgesetzt. Besteht ein hoher Kühlbedarf kann es erforderlich sein, die zweite Wärmepumpe über einen längeren Zeitraum zu betreiben. Ein erhöhter Kühlbedarf kann über die Drehzahl der Pumpen der Kühlvorrichtungen, der Steuersignale der Pumpen und/oder über eine Datenschnittstelle der Pumpen erfasst werden. In Abhängigkeit dieser Information kann das Zu- und Abschalten der zweiten Wärmepumpe gesteuert werden. In erster Linie erfolgt die Steuerung der Zu- und Abschaltung der Wärmepumpen, insbesondere der zweiten Wärmepumpe, in Abhängigkeit der Fluidtemperatur.

Alternativ kann in weiteren Fluidsystemen auch eine dritte Wärmepumpe alternativ oder zusätzlich zur zweiten Wärmepumpe in Betrieb gesetzt werden, um ein weiteres Kühlen zu erreichen oder die zweite und die dritte Wärmepumpe abwechselnd in Betrieb zu setzen, wenn ein erhöhter Kühlbedarf vorherrscht. Es können auch mehr als drei Wärmepumpen bei einem Fluidsystem vorgesehen sein.

Die Steuerung der Zufuhr des Fluids zu der mindestens einen Kühlvorrichtung erfolgt über die dieser Kühlvorrichtung zugeordnete Pumpe. Im Idealfall ist die Zufuhr des Fluids für die Kühlvorrichtung konstant. Die Regelung des Fluids im Verbraucherfluidkreislauf erfolgt über die Ausgleichspumpe, welche als sogenannte Überströmpumpe ausgebildet sein kann.

Bei dem Verfahren wird die mindestens eine Ausgleichspumpe so gesteuert, dass der Massestrom im Verbraucherfluidkreislauf konstant gehalten wird. Die mindestens eine Ausgleichspumpe kann zudem nach Maßgabe der mindestens einen Kühlvorrichtung und/oder nach Maßgabe des Massestroms im Erzeugerfluidkreislauf gesteuert werden, wobei bei einer Erhöhung des Massestroms im Erzeugerfluidkreislauf entsprechend der Massestrom im Verbraucherfluidkreislauf erhöht wird, um das Massestromverhältnis in der hydraulischen Weiche oder dem hydraulischen Behälter konstant zu halten. Ebenso wird die mindestens eine Ausgleichspumpe nach Maßgabe der mindestens einen Kühlvorrichtung gesteuert, wobei ein höherer Kühlbedarf für die mindestens eine Kühlvorrichtung in einem größeren Massestrom, bspw. in einem Nebenkreislauf des Verbraucherfluidkreislaufs, resultiert. Damit der Massestrom im Verbraucherfluidkreislauf konstant bleibt, muss der Massestrom, der über die Ausgleichspumpe gefördert wird, entsprechend reduziert werden.

Der Erzeugerfluidkreislauf weist, wie vorstehend beschrieben, mindestens zwei Wärmepumpen auf, wobei die mindestens zwei Wärmepumpen nach Maßgabe der Temperatur des Fluids im Erzeugerfluidkreislauf und/oder im Verbraucherfluidkreislauf gesteuert werden.

Zudem kann das Massestromverhältnis in der hydraulischen Weiche von Verbraucherfluidkreislauf zu Erzeugerfluidkreislauf auf 1:1-1,3 eingestellt oder das Massestromverhältnis bei einem hydraulischen Behälter der Art eingestellt werden, dass die Schichtung im Behälter nicht zerstört wird. Hierdurch wird insbesondere sichergestellt, dass keine Rückführung von Fluid aus der Rückführleitung des Verbraucherfluidkreislaufs über die hydraulische Weiche zu der Zuführleitung des Verbraucherfluidkreislaufs erfolgt. Um die Schichtung nicht zu zerstören kann in einem im Wesentlichen vollständig beladenen Zustand des hydraulischen Behälters das Massestromverhältnis von Verbraucherfluidkreislauf zu Erzeugerfluidkreislauf auf 1:0,9 eingestellt werden.

Die Entkopplung des Verbraucherfluidkreislaufs von dem Erzeugerfluidkreislauf über die hydraulische Weiche oder den hydraulischen Behälter und die Regulierung des Massestromverhältnisses in der vorstehend beschriebenen Art reduzieren ein Takten der Wärmepumpen. Hierdurch können vor allem in einem Fluidsystem mit mehreren Wärmepumpen diese optimiert betrieben werden. Gegenüber Systemen aus dem Stand der Technik kommt es nicht zu einem häufigen An- und Ausschalten der Wärmepumpen, um einen variierenden Kältebedarf der Kühlvorrichtungen zu befriedigen. Das hierin beschriebene Verfahren und das hierin beschriebene Fluidsystem ermöglichen vielmehr einen konstanten Betrieb von Wärmepumpen mit einer geringeren Anzahl an Ein- und Ausschaltvorgängen.

Bei einem Fluidsystem, welches die vorstehend genannte Aufgabe löst, aufweisend einen Erzeugerfluidkreislauf und einen Verbraucherfluidkreislauf,
- ist zwischen dem Erzeugerfluidkreislauf und dem Verbrauchfluidkreislauf eine hydraulische Weiche oder ein hydraulischer Behälter als Weiche angeordnet,
- sind die hydraulische Weiche oder der hydraulische Behälter mit einer Zuführleitung und einer Rückleitung des Erzeugerfluidkreislaufs und einer Zuführleitung und einer Rückführleitung des Verbraucherfluidkreislaufs verbunden,
- weist der Erzeugerfluidkreislauf mindestens eine Wärmepumpe und mindestens eine Förderpumpe auf,
- weist der Verbraucherfluidkreislauf mindestens eine Kühlvorrichtung und mindestens eine Ausgleichspumpe auf, und
- ist die mindestens eine Ausgleichspumpe derart steuerbar, dass der Massestrom des Verbraucherfluidkreislaufs bei einer hydraulischen Weiche oder bei einem hydraulischen Behälter im nicht vollständig beladenen Zustand des hydraulischen Behälters kleiner oder gleich dem Massestrom des Erzeugerfluidkreislaufs und/oder das Massestromverhältnisses zwischen dem Erzeugerfluidkreislauf und dem Verbraucherfluidkreislauf in der hydraulischen Weiche oder in dem hydraulischen Behälter konstant sind.

Das Fluidsystem ist entsprechend den Merkmalen des Verfahrens steuerbar und so ausgebildet, dass der Massestrom des Verbraucherfluidkreislaufs kleiner oder gleich dem Erzeugerfluidkreislauf und das Massestromverhältnis konstant sind, wobei die mindestens eine Wärmepumpe bzw. der Kälteerzeuger das Fluid auf ΔT = 4 K einkühlt bzw. regelt.

Hierzu ist die mindestens eine Ausgleichspumpe zwischen der Zuführleitung und der Rückführleitung des Verbraucherfluidkreislaufs angeordnet. Die Steuerung bzw. Regelung der Ausgleichspumpe erfolgt in Abhängigkeit des Kältebedarfs der mindestens einen Kühlvorrichtung, d.h. des über die Pumpe der Kühlvorrichtung der Kühlvorrichtung zugeführten Massestroms, und des Massestroms im Erzeugerfluidkreislauf.

Um den Massestrom in dem Verbraucherfluidkreislauf konstant zu halten, wird die Ausgleichspumpe derart geregelt, dass diese Schwankungen aufgrund verschiedener Leistungsanforderungen der Kühlvorrichtungen (Kältebedarf) und damit verschiedener Fördermengen der Pumpen zum Erzielen eines Soll-Fluidstroms ausgleicht. Dieser Soll-Fluidstrom (Massestrom Verbraucherfluidkreislauf) wird dabei so geregelt, dass dieser kleiner als der Massestrom im Erzeugerfluidkreislauf ist.

Wie eingangs für das Verfahren bereits angegeben, weist der Verbraucherfluidkreislauf eine Vielzahl von Kühlvorrichtungen und jeweils eine den Kühlvorrichtungen zugeordnete Pumpe auf, wobei die Kühlvorrichtungen und die zugeordneten Pumpen in parallelen Nebenfluidkreisläufen angeordnet und mit der Zuführleitung und der Rückführleitung des Verbraucherfluidkreislaufs verbunden sind. Der Verbraucherfluidkreislauf weist mindestens zwei parallele Nebenkreisläufe mit jeweils mindestens einer Pumpe und einer Kühlvorrichtung auf, wobei Zuführleitungen der Nebenkreisläufe des Verbraucherfluidkreislaufs mit der Zuführleitung des Verbraucherfluidkreislaufs und Rückführleitungen der Nebenkreisläufe mit der Rückführleitung des Verbraucherfluidkreislaufs verbunden sind. Zusätzlich weist der Erzeugerfluidkreislauf mindestens zwei parallele Nebenkreisläufe mit einer Wärmepumpe auf, wobei Zuführleitungen der Nebenkreisläufe des Erzeugerfluidkreislaufs mit der Zuführleitung des Erzeugerfluidkreislaufs und Rückführleitungen der Nebenkreisläufe mit der Rückführleitung des Erzeugerfluidkreislaufs verbunden sind.

In dem Fluidsystem kann ein Kältemittel aufgenommen sein, welches in den Leitungen des Verbraucherfluidsystems, des Erzeugerfluidsystems und der hydraulischen Weiche oder in dem hydraulischen Behälter aufgenommen ist. Als Kältemittelträger kann Wasser mit einem Frostmittel, insbesondere eine sogenannte Sole zum Einsatz kommen, die eine Wasser-Glykol-Mischung umfasst.

Die mindestens eine Ausgleichspumpe, die mindestens eine Förderpumpe und/oder die mindestens eine Pumpe können drehzahlgesteuerte Pumpen sein. Drehzahlgesteuerte bzw. -geregelte Pumpen können einfach in ihrer Fördermenge verändert und zentral gesteuert werden. Die mindestens eine Ausgleichspumpe kann dabei als sogenannte Überströmpumpe ausgebildet sein.

Mindestens in der Rückführleitung des Verbraucherfluidkreislaufs, der Zuführleitung des Verbraucherfluidkreislaufs, der Rückführleitung des Erzeugerfluidkreislaufs, und/oder der Zuführleitung des Erzeugerfluidkreislaufs kann mindestens eine Temperaturerfassungseinrichtung angeordnet sein. Die Temperaturerfassungseinrichtungen dienen zum Messen der Fluidtemperatur an verschiedenen Stellen im Fluidsystem. In Abhängigkeit der gemessenen Fluidtemperaturen kann bspw. der Betrieb der Wärmepumpen gesteuert werden. Hierzu wird auf die eingangs beschriebenen Temperaturabhängigen Verfahren verwiesen.

Die Kühlvorrichtungen können Wärmeübertrager sein, wie z.B. Platten- oder Rohr-Wärmeübertrager mit einem Gebläse oder Ventilator.

Der hydraulische Behälter kann als hydraulischer Speicher und insbesondere als Fluidspeicher ausgebildet sein, wobei in dem Fluidspeicher gegenüber einer hydraulischen Weiche eine große Menge an Fluid aufgenommen ist. Beispielsweise weist der Fluidspeicher ein Fassungsvermögen von über 500 Litern auf. Der Fluidspeicher weist eine Isolierung auf, so dass im Wesentlichen keine Wärmeübertragung mit der Umgebung erfolgt. Der Fluidspeicher weist eine Schichtung mit mehreren Temperaturniveaus auf. Im Bodenbereich des Fluidspeichers ist das Fluid am kältesten und weist im Wesentlichen die gleiche Temperatur wie das Fluid in der Rückführleitung des Erzeugerfluidkreislaufs auf. Im oberen Bereich des Fluidspeichers ist das Fluid am wärmsten und weist im Wesentlichen die gleiche Temperatur auf wie das Fluid in der Rückführleitung des Verbraucherfluidkreislaufs. Aufgrund der relativ großen aufgenommenen Fluidmenge kann über einen längeren Zeitraum die Fluidtemperatur in der Zuführleitung des Verbraucherfluidkreislaufs ohne Kühlung durch eine Wärmepumpe bereitgestellt werden, wenn eine Mindestmenge an "kaltem" Fluid im Fluidspeicher aufgenommen ist.

In dem Fluidspeicher können ferner Speicherelemente aufgenommen sein. Die Speicherelemente sind beispielsweise mit einem Phasenwechselmaterial ("Phase Change Material"- PCM) gefüllte Kugeln. Als Phasenwechselmaterial kann beispielsweise Wasser verwendet werden. Durch die Befüllung des Fluidspeichers mit Speicherelementen kann die Speicherfähigkeit erhöht werden und das Durchmischen und damit die Zerstörung der Schichtung verhindert oder zumindest reduziert werden. Die Speicherelemente weisen eine im Wesentlichen feste Anordnung im Fluidspeicher auf und sind zumindest abschnittsweise von dem Fluid umgeben. Die Speicherelemente nehmen dann entweder Wärme vom Fluid auf oder geben Wärme an das Fluid ab. Die Speicherelemente können auch mit verschiedenen Phasenwechselmaterialien gefüllt sein, wobei bspw. die Schmelztemperatur des Phasenwechselmaterials der Speicherelemente im Bereich des Bodens des Fluidspeichers niedriger ist als die Schmelztemperatur des Phasenwechselmaterials der Speicherelemente im oberen Bereich des Fluidspeichers. Anstelle von Kugeln oder anderen mit einem Phasenwechselmaterial gefüllten Speicherelementen können auch Platten aufgenommen werden, die in verschiedenen Schichten im Fluidspeicher angeordnet sind und Durchtrittsöffnungen für das Fluid aufweisen.

Zusätzlich kann durch das Fluidsystem ein Speichern der "Kälte" erreicht werden. Ein Fluidsystem mit einem "Kälte"-Puffer weist bspw. mehrere Kühlvorrichtungen in parallelen Nebenkreisläufen in dem Verbraucherfluidkreis und mindestens zwei Wärmepumpen auf. Die Kühlvorrichtungen werden jeweils über eine zugeordnete Pumpe mit Fluid versorgt. Um "Kälte" zu speichern werden die mindestens zwei Wärmepumpen gleichzeitig betrieben, wodurch die Fluidtemperatur gesenkt werden kann. Die Fluidtemperatur in der Zuführleitung des Verbraucherfluidkreislaufs wird dabei abgesenkt. Daher werden die Pumpen der Kühlvorrichtungen entsprechend geregelt, so dass weniger Fluid den Kühlvorrichtungen zugeführt wird. Die Kühlleistung der Kühlvorrichtungen bleibt dabei aber im Wesentlichen gleich. Als Folge dessen wird auch die Kühltemperatur in der Rückführleitung des Verbraucherfluidkreislaufs reduziert. Nach dem Absenken der Fluidtemperatur kann nur noch eine Wärmepumpe betrieben werden, welche die Fluidtemperatur auf dem abgesenkten Temperaturniveau hält. Wird nun von den Kühlvorrichtungen eine höhere Kühlleistung gefordert, kann diese dem Fluid entnommen werden. Dabei steigt die Fluidtemperatur in der Rückführleitung des Verbraucherfluidkreislaufs, bleibt aber unter oder im Wesentlichen gleich dem Temperaturniveau vor dem Absenken der Fluidtemperatur. Übersteigt die Fluidtemperatur in der Rückführleitung des Verbraucherfluidkreislaufs einen bestimmbaren Schwellenwert, wird die zweite Wärmepumpe zugeschaltet.

Durch das vorstehend beschriebene Verfahren ist es möglich, "Kälte" in dem Fluidsystem zu speichern. In Abhängigkeit der Leitungslänge kann daher ein relativ großer "Kälte"-Puffer durch das Fluidsystem bereitgestellt werden. Bspw. kann nachts "Kälte" gespeichert werden, wenn die Energiekosten für den Betrieb der Wärmepumpen gering sind.

Das Fluidsystem kann beispielsweise aber auch bei Anlagen eingesetzt werden, die geringe Leitungslängen aufweisen oder die Subsysteme mit relativ geringen Ausmaßen betreffen. Hierbei kann beispielsweise die Ausgleichspumpe des Verbraucherfluidkreislaufs in einem Kühlregal eines Kühlsystems angeordnet sein, wobei in dem Kühlregal Kühlvorrichtungen angeordnet sind. Die Kühlvorrichtungen weisen eine separate drehzahlgeregelte Pumpe auf, die ebenfalls im Kühlregal angeordnet ist. Der Verbraucherfluidhauptkreislauf erstreckt sich über das Kühlregal und die Verbraucherfluidnebenkreisläufe sind mit dem Verbraucherfluidhauptkreislauf verbunden.

Zusätzlich kann durch ein Fluidsystem mit einem hydraulischen Behälter als Weiche ein Speichern von "Kälte" erreicht werden. Ein Fluidsystem mit einem hydraulischen Behälter als Weiche weist bspw. mehrere Kühlvorrichtungen in parallelen Nebenkreisläufen in dem Verbraucherfluidkreis und mindestens zwei Wärmepumpen auf. Die Kühlvorrichtungen werden jeweils über eine zugeordnete Pumpe mit Fluid versorgt. Um "Kälte" zu speichern werden die mindestens zwei Wärmepumpen gleichzeitig betrieben, wodurch die Fluidtemperatur gesenkt werden kann. Die Fluidtemperatur in der Zuführleitung des Erzeugerfluidkreislaufs wird dabei abgesenkt. Dies geschieht z.B. dadurch, dass die erste Wärmepumpe nicht mehr abschaltet oder die zweite Wärmepumpe zugeschaltet wird. Wird z.B. keine zweite Wärmepumpe zugeschaltet, so wird die Drehzahl der Ausgleichspumpe (Überströmpumpe) reduziert. Wird hingegen die zweite Wärmepumpe zugeschaltet, so bleibt die Drehzahl konstant oder wird erhöht. Ziel dieser Anpassung ist, dass der Massestrom im Verbraucherfluidkreislauf reduziert wird und somit der Massestrom der über den hydraulischen Behälter strömt zunimmt, wobei durch die Absenkung der Fluidtemperatur die Kühlleistung der Kühlvorrichtungen dabei aber im Wesentlichen gleich bleibt. Nach dem Durchkühlen des hydraulischen Behälters durch das Absenken der Fluidtemperatur besteht die Möglichkeit die zweite Wärmepumpe Außerbetrieb zu setzen. Durch die Herabsetzung des Massestromes auf der Erzeugerseite und der Anpassung des Massestromes auf der Verbraucherseite durch die Ausgleichspumpe (Überströmpumpe) besteht die Möglichkeit durch die Verschiebung des Massestromverhältnisses auf Verhältnisse von 1 < 1, z. B. auf 0,9 : 1 den hydraulischen Behälter zu entladen. Begrenzt wird das Massestromverhältnis durch das Verhältnis ab dem die Gefahr besteht, dass die Schichtung im hydraulischen Behälter zerstört wird. Anhaltspunkt bildet hier der Erfahrungswert, dass die Fluidströmung (bezogen auf die Strömung im hydraulischen Behälter) nicht höher als 0,3 m/s sein darf. Hierdurch steigt die Fluidtemperatur im hydraulischen Behälter an, bis dieser entladen ist. Dieses ist dann erreicht, wenn die Temperaturgrenzschicht im unteren Bereich des hydraulischen Behälters die Temperatur des Rücklaufes, also der Fluidtemperatur in der Rückführleitung des Verbraucherfluidkreislaufs, erreicht hat. Nach dem Erreichen dieses Punktes erfolgt entweder die erneute Beladung des hydraulischen Behälters mit Kälte oder eine erneute Einregulierung des Massestromverhältnisses zwischen 1:1 und 1:1,3, wobei das maximal zulässige Massestromverhältnis aber primär dadurch bestimmt wird, ab welchem Massestromverhältnis die Schichtung im hydraulischen Behälter zerstört wird. Anhaltspunkt bildet hier der vorstehend genannte Erfahrungswert, wonach die Fluidströmung (bezogen auf die Strömung im hydraulischen Behälter) nicht höher als 0,3 m/s sein darf.

Des Weiteren besteht die Möglichkeit zur Erhöhung der Speicherung von Kälte den Behälter mit einem Phasenwechselmaterial zu beladen, wie vorstehend bereits angegeben, wodurch sich die Speicherfähigkeit des Systems erhöht.

Durch das vorstehend beschriebene Verfahren ist es möglich, "Kälte" in dem Fluidsystem zu speichern. Insbesondere bei langen Leitungen kann daher ein relativ großer "Kälte"-Puffer durch das Fluidsystem bereitgestellt werden. Bspw. kann nachts "Kälte" gespeichert werden, wenn die Energiekosten für den Betrieb der Wärmepumpen gering sind.

Es wird hierin stets von Masseströmen und Massestromverhältnissen gesprochen. Es kann aber ebenso von Volumenströmen und Volumenstromverhältnissen gesprochen werden. Es erfolgt keine oder zumindest nur eine vernachlässigbare kleine Änderung der Dichte des Fluids, so dass für das Fluidsystem und das Verfahren zum Steuern des Fluidsystems im Allgemeinen gilt, dass der Massestrom äquivalent zum Volumenstrom ist. Ferner gelten die für das Verfahren genannten Vorteile ebenso für das Fluidsystem und umgekehrt.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

In den Zeichnungen zeigt:
- Fig. 1: eine schematische Darstellung eines Fluidsystems;
- Fig. 2: einen schematischen Temperaturverlauf der Rücklauftemperatur;
- Fig. 3: eine schematische Darstellung der Massestromanteile im Verbraucherfluidkreislauf;
- Fig. 4: eine schematische Darstellung eines Fluidsystems mit einem hydraulischen Behälter einer weiteren Ausführungsform;
- Fig. 5: eine weitere schematische Darstellung des Fluidsystems mit einem hydraulischen Behälter der weiteren Ausführungsform;
- Fig. 6: eine schematische Darstellung eines Fluidsystems mit einem hydraulischen Behälter einer noch weiteren Ausführungsform;
- Fig. 7: eine schematische Darstellung des Fluidsystems mit einem hydraulischen Behälter der noch weiteren Ausführungsform;
- Fig. 8: eine schematische Darstellung eines Fluidsystems mit einem mit Phasenwechselmaterialien gefüllten hydraulischen Behälter einer weiteren Ausführungsform; und
- Fig. 9: eine schematische Darstellung des Fluidsystems mit einem mit Phasenwechselmaterialien gefüllten hydraulischen Behälter der weiteren Ausführungsform.

In den Figuren mit gleichen Bezugszeichen versehene Teile entsprechen im Wesentlichen einander, sofern nichts anderes angegeben ist. Ferner wird darauf verzichtet, Bestandteile und Komponenten zu beschreiben, welche nicht wesentlich zum Verständnis der hierin offenbarten technischen Lehre sind.

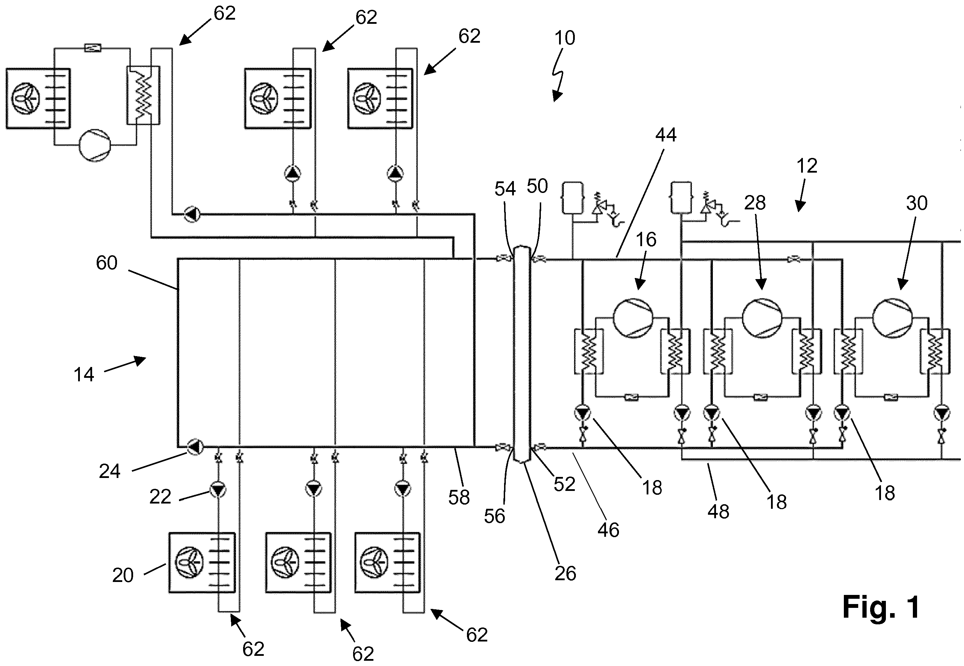

Fig. 1 zeigt ein Fluidsystem 10, aufweisend einen Erzeugerfluidkreislauf 12 und einen Verbraucherfluidkreislauf 14. Der Erzeugerfluidkreislauf 12 und der Verbraucherfluidkreislauf 14 sind jeweils mit Anschlüssen 50, 52, 54, 56 einer hydraulischen Weiche 26 verbunden. Die hydraulische Weiche 26 dient zur Entkopplung des Erzeugerfluidkreislaufs 12 von dem Verbraucherfluidkreislauf 14.

Der Erzeugerfluidkreislauf 12 weist eine Zuführleitung 44 und eine Rückführleitung 46 auf. Der Erzeugerfluidkreislauf 12 umfasst weiter mindestens eine erste Wärmepumpe 16, eine zweite Wärmepumpe 28 und eine dritte Wärmepumpe 30, sowie erste Förderpumpen 18. Die Zuführleitung 44 ist über ein Ventil mit dem Anschluss 50 der hydraulischen Weiche 26 verbunden. Über die Zuführleitung 44 sind die Wärmepumpen 16, 28 und 30 angeschlossen. Die Wärmepumpen dienen im aktiven Zustand zur Kühlung des über die Zuführleitung 44 zugeführten Fluids.

Die Wärmepumpen 16, 28 und 30 sind zudem mit einem zweiten Fluidkreis 48 gekoppelt, über den Wärme ab- und Heizvorrichtungen zugeführt wird. Die Heizvorrichtungen können die über die Wärmepumpen 16, 28 und 30 erzeugte Wärmeenergie ausnutzen. In dem Erzeugerfluidkreislauf 12 können auch weitere hydraulische Weichen angeschlossen sein, die mit Heizvorrichtungen und/oder -fluidkreisläufen gekoppelt sind. Der zweite Fluidkreislauf 48 umfasst weitere Komponenten, wie Förderpumpen, Ventile, Wärmetauscher und Heizvorrichtungen, die in Fig. 1 nicht weiter dargestellt sind und nicht weiter beschrieben werden.

Das über die Wärmepumpen 16, 28 und 30 gekühlte Fluid wird über die Förderpumpen 18 und nicht bezeichnete Ventile in die Rückführleitung 46 eingebracht. Die Rückführleitung 46 ist über ein Ventil mit dem Anschluss 52 der hydraulische Weiche 26 verbunden. An der hydraulischen Weiche 26 liegt dem Anschluss 52 ein Anschluss 56 gegenüber. Der Anschluss 56 ist über ein Ventil mit der Zuführleitung 58 des Verbraucherfluidkreislaufs 14 verbunden.

Der Verbraucherfluidkreislauf 14 weist eine Rückführleitung 60 auf, die über ein Ventil mit dem Anschluss 54 der hydraulischen Weiche 26 verbunden ist. Der Anschluss 54 liegt dem Anschluss 50 gegenüber. In der hydraulischen Weiche 26 erfolgt dann ein Durchströmen des Fluids von dem Anschluss 52 zu dem Anschluss 56 und von dem Anschluss 54 zu dem Anschluss 50. In der hydraulischen Weiche 26 stellt sich eine Schichtung mit verschiedenen Temperaturniveaus ein. Die Ausbildung der hydraulischen Weiche 26 und deren Dimensionierung sind an das Fluidsystem 10 anzupassen. Die Leitungen des Fluidsystems 10 weisen Querschnitte auf, die in Abhängigkeit der zu erzielenden Kühlleistung, der Länge der Leitungen und der Größe des Fluidsystems 10 festgelegt werden. Die Leitungsquerschnitte können auch bei den verschiedenen Leitungen voneinander abweichen. Zudem können auch die Leitungsquerschnitte einer Leitung über deren Länge hinweg variieren.

Der Verbraucherfluidkreislauf 14 weist mehrere parallele Nebenfluidkreisläufe 62 auf. Zuführleitungen der Nebenfluidkreisläufe 62 sind mit der Zuführleitung 58 des Hauptfluidkreislaufs verbunden. Rückführleitungen der Nebenfluidkreisläufe 62 sind mit der Rückführleitung 60 des Hauptfluidkreislaufs verbunden. In den Nebenfluidkreisläufen 62 sind Pumpen 22 und Kühlvorrichtungen 20 sowie Ventile angeordnet. Die Pumpen 22 regeln die Zufuhr des über die Wärmepumpen 16, 28, 30 gekühlten Fluids zu den Kühlvorrichtungen 20. Die Pumpen 22 sind so in den Nebenfluidkreisläufen 62 angeordnet, dass diese den Kühlvorrichtungen 20 vorgeschaltet sind. Das die Kühlvorrichtungen 20 durchströmende Fluid wird über die Rückführleitungen der Nebenfluidkreisläufe 62 zurückgeführt, wobei die Rückführleitungen in der Rückführleitung 60 des Hauptfluidkreislaufs zusammenlaufen und an dem Anschluss 54 der hydraulischen Weiche 26 anliegen. Die Pumpen 22 ermöglichen eine bedarfsabhängige Zufuhr von gekühlten Fluid zu den Kühlvorrichtungen 20. Über die Ventile können die Nebenfluidkreisläufe 62 von dem Hauptfluidkreislauf getrennt werden.

Zwischen der Zuführleitung 58 und der Rückführleitung 60 ist eine Ausgleichspumpe 24 angeordnet. Die Ausgleichspumpe 24 ist im Hauptfluidkreislauf des Verbraucherfluidkreislaufs 14 so angeordnet, dass sie den Zuführleitungen der Nebenfluidkreisläufe 62 nachgeschaltet und den Rückführleitungen der Nebenfluidkreisläufe vorgeschaltet ist. Die Ausgleichspumpe 24 dient zum Einstellen eines konstanten Masse- bzw. Volumenstroms im Verbraucherfluidkreislauf 14 und zur Regulierung des Masse- bzw. Volumenstromverhältnis in der hydraulischen Weiche 26. Die Ausgleichspumpe 24 ist als sogenannte Überströmpumpe ausgebildet.

Zudem weist das Fluidsystem 10 mehrere Temperaturerfassungseinrichtungen und Steuer- und Regeleinheiten auf. Die Temperaturerfassungseinrichtungen befinden sich mindestens in den Rückführleitungen 46, 60 und den Zuführleitungen 44 und 58, insbesondere im Bereich der Anschlüsse 50, 52, 54 und 56 der hydraulischen Weiche 26. Es können auch an anderen Stellen des Fluidsystems 10 weitere Temperaturerfassungseinrichtungen und Messvorrichtungen vorgesehen sein.

In dem Fluidsystem 10 ist als Fluid ein Kältemittel (Wasser mit Frostschutzmittel), insbesondere eine Sole, aufgenommen. Die Sole ist eine Wasser-Glykol-Mischung. Die Wärmepumpen 16, 28 und 30 sind so ausgebildet und ausgelegt, dass sie eine bestimmte Kühlung des Fluids im Erzeugerfluidkreislauf 12 bereitstellen. Ebenso wird ein bestimmtes Erwärmen eines Fluids im Fluidkreis 48 durch die Wärmepumpen 16, 28 und 30 erreicht.

Bei dem Fluidsystem 10 sind in einem normalen Betrieb sämtliche Ventile, die bspw. als Magnetventile ausgebildet sein können, geöffnet.

In einem ersten, beispielhaften Betrieb des Fluidsystems 10, wird nur die erste Wärmepumpe 16 betrieben. Die Wärmepumpen 28 und 30 sind somit inaktiv und bewirken keine Kühlung des Fluids. Das gekühlte Fluid wird über die Förderpumpe 18 in die Rückführleitung 46 eingebracht und strömt zu dem Anschluss 52 der hydraulischen Weiche 26. Über eine Temperaturerfassungseinrichtung wird die Fluidtemperatur in der Rückführleitung 46 erfasst. Das gekühlte Fluid durchströmt die hydraulische Weiche 26 und strömt über den Anschluss 56 der hydraulischen Weiche 26 in die Zuführleitung 58 des Verbraucherfluidkreislaufs 14. Eine in der Zuführleitung 58 angeordnete Temperaturerfassungseinrichtung misst die Fluidtemperatur nach dem Austritt des Fluids an dem Anschluss 56. Das Fluid weist dabei die gleiche Temperatur wie in der Rückführleitung 46 auf.

Über die Zuführleitung 58 wird das gekühlte Fluid den Nebenfluidkreisläufen 62 zugeführt. In Abhängigkeit des Kühlbedarfs, regeln die Pumpen 22 die Zufuhr des Fluids zu den Kühlvorrichtungen 20. In den Kühlvorrichtungen 20 nimmt das Fluid Wärme auf. Das erwärmte Fluid wird dann über die Rückführleitungen der Nebenfluidkreisläufe 62 der Rückführleitung 60 zugeführt. In der Rückführleitung 60 ist eine Temperaturerfassungseinrichtung angeordnet, welche die Fluidtemperatur in der Rückführleitung 60 misst. Über den Anschluss 54 durchströmt dann das erwärmte Fluid die hydraulische Weiche 26 und gelangt über den Anschluss 50 in die Zuführleitung 44. In der Zuführleitung 44 ist eine weitere Temperaturerfassungseinrichtung angeordnet, welche die Fluidtemperatur misst. Die Fluidtemperatur in der Zuführleitung 44 liegt dann über der Fluidtemperatur in der Rückführleitung 46. Über die Zuführleitung 44 wird das erwärmte Fluid der Wärmepumpe 16 zugeführt. Die Wärmepumpe 16 bringt das Fluid wieder auf das Temperaturniveau, welches in der Zuführleitung 58 bzw. der Rückführleitung 46 gemessen wurde und welches vorgegeben worden ist. Die Temperaturniveaus können über eine zentrale Steuerung vorgegeben und verändert werden.

In Abhängigkeit der Zufuhr des Fluids zu den Kühlvorrichtungen 20 über die Pumpen 22 regelt die Ausgleichspumpe 24 den Gesamt-Masse- bzw. Volumenstrom im Verbraucherfluidkreis 14 und stellt das Masse- bzw. Volumenstromverhältnis in der hydraulischen Weiche 26 ein. Die Ausgleichspumpe wird so geregelt, dass der Massestrom im Verbraucherfluidkreislauf 14 konstant ist. Wird ein höherer Massestrom über die Pumpen 22 bezogen, so wird der Massestrom, der über die Ausgleichspumpe 24 gefördert wird, reduziert. Analog dazu wird der Massestrom, der über die Ausgleichspumpe 24 gefördert wird, erhöht, wenn der Massestrom über die Pumpen 22 reduziert wird. Die Pumpen 22 und die Ausgleichspumpe 24 sind als drehzahlgeregelt Pumpen ausgebildet und erhalten von einer nicht dargestellten Steuerung Steuersignale. Diese Steuersignale und/oder Signale über Datenschnittstellen der Pumpen 22 und der Ausgleichspumpe 24 werden zur Bestimmung und Einstellung des Massestroms herangezogen. Die von den jeweiligen Pumpen 22 geförderten Masseströme werden addiert. In Abhängigkeit eines einstellbaren Gesamtmassestroms im Verbraucherfluidkreislauf 14 wird dann die Drehzahl der Ausgleichspumpe 24 bestimmt, so dass der Gesamtvolumenstrom konstant bleibt.

Bei der Einstellung des Gesamtmassestroms kann es zu geringen Abweichungen von dem Soll-Gesamtmassestrom im Verbraucherfluidkreislauf 14 kommen. Daher ist der Gesamtmassestrom nicht immer konstant, jedoch sind diese regelungsbedingten Abweichungen sehr gering und werden über die Regulierung des Massestromverhältnis in der hydraulischen Weiche 26 kompensiert.

Die Ausgleichspumpe 24 wird zudem so geregelt, dass das Masse- bzw. Volumenstromverhältnis in der hydraulischen Weiche 26 im Wesentlichen konstant ist. Zudem wird die Ausgleichspumpe 24 so geregelt, dass das Massestromverhältnis in der hydraulischen Weiche 26 zwischen Massestrom Verbraucherfluidkreislauf 14 und Massestrom Erzeugerfluidkreislauf 12 1:1-1,3 ist.

Der Masse- bzw. Volumenstrom des Verbraucherfluidkreislaufs 14 ist daher kleiner oder gleich dem Masse- bzw. Volumenstrom des Erzeugerfluidkreislaufs 12. In einem Idealbetriebszustand sind die Masseströme im Erzeugerfluidkreislauf 12 und im Verbraucherfluidkreislauf 14 gleich groß. In einem solchen Betriebszustand kommt es zu einer Durchströmung der hydraulischen Weiche 26 ohne Rückführung des Fluids von der Rückführleitung 46 zu der Zuführleitung 44 und von der Rückführleitung 60 zu der Zuführleitung 58. Eine Rückführung des Fluids von der Rückführleitung 60 zu der Zuführleitung 58 über die hydraulische Weiche 26 muss vermieden werden, da ansonsten die Fluidtemperatur in der Zuführleitung 58 höher als in der Rückführleitung 46 ist. Aufgrund der Zuführung von erwärmten Fluid aus der Rückführleitung 54 über die hydraulische Weiche 26 kann eine solche Abweichung von der Wärmepumpe 16 nur unzureichend ausgeglichen werden. Insbesondere müsste dann eine Kühlung des Fluids soweit erfolgen, dass die Fluidtemperatur in der Rückführleitung 60 so groß ist wie die Fluidtemperatur in der Rückführleitung 46. Es kommt jedoch bei einer solchen Rückführung zu dem Problem, dass die Temperaturdifferenz zwischen der Zuführleitung 58 und der Rückführleitung 54 aufgrund der Rückführung von erwärmten Fluid über die hydraulische Weiche 26 zu gering ist, um die Wärmepumpe 16 in Betrieb zu setzen. Die Wärmepumpen 16, 28 und 30 benötigen regelungstechnisch eine bestimmte Temperaturdifferenz, um arbeiten zu können. Ist die Temperaturdifferenz des Fluids zwischen der Zuführleitung 58 und der Rückführleitung 60 kleiner als 3 K, ist kein Betrieb der Wärmepumpen 16, 28 und 30 möglich. Vorzugsweise sollte die Temperaturdifferenz in etwa bei 4 K +/- 0,5K liegen.

Damit es jedoch nicht zu solchen Problemen kommt, wird das Massestromverhältnis von Verbraucherfluidkreislauf 14 zu Erzeugerfluidkreislauf 12 auf 1 zu >1 geregelt. Bei einem geringeren Kühlbedarf auf der Abnehmerseite im Verbraucherfluidkreislauf 14 kann es zu einer Rückführung des Fluids von der Rückführleitung 46 zu der Zuführleitung 44 über die hydraulische Weiche 26 kommen. Hierbei wird die Fluidtemperatur ebenfalls abgesenkt, jedoch wird den Kühlvorrichtungen 20 kein Fluid mit einer gegenüber der Fluidtemperatur in der Rückführleitung 46 erhöhten Fluidtemperatur über die Zuführleitung 58 zugeführt.

Zur Einstellung des Masse- bzw. Volumenstroms im Verbraucherfluidkreislauf 14 und dem Masse- bzw. Volumenstromverhältnis in der hydraulischen Weiche 26 über die Ausgleichspumpe 24 wird der über die Förderpumpe(n) 18 bereitgestellte Masse- bzw. Volumenstrom ermittelt bzw. wird der Masse- bzw. Volumenstrom im Verbraucherfluidkreislauf 14 in Abhängigkeit des Masse- bzw. Volumenstroms im Erzeugerfluidkreislauf 12 eingestellt. Die Förderpumpen 18 sind wie die Pumpen 22 und die Ausgleichspumpe 24 drehzahlgeregelte Pumpen. Die Förderpumpen 18 werden über Steuersignale geregelt. Über diese Steuersignale und/oder über Signale, die über Datenschnittstellen der Förderpumpen 18 empfangen werden, kann die Drehzahl der Förderpumpen 18 geregelt werden. Dadurch wird der Masse- bzw. Volumenstrom im Erzeugerfluidkreislauf 12 bestimmt und eingestellt.

Die Wärmepumpen 16, 28 und 30 können separat zugeschaltet werden, sodass nur eine der Wärmepumpen 16, 28 und 30, zwei der Wärmepumpen 16, 28 und 30 oder alle drei Wärmepumpen 16, 28 und 30 zum Kühlen des Fluids in Betrieb gesetzt werden. Das Zu- und Abschalten der Wärmepumpen 16, 28 und 30 erfolgt in Abhängigkeit der Rücklauftemperatur des Fluids in der Rückführleitung 60 des Verbraucherfluidkreislaufs 14 und/oder in der Zuführleitung 44 des Erzeugerfluidkreislaufs 12.

Bspw. kann bei dem Fluidsystem 10 die Fluidtemperatur in der Rückführleitung 46 weiter herabgesetzt werden. Hierzu werden zum Beispiel zwei oder drei Wärmepumpen 16, 28 und 30 in Betrieb gesetzt. Bei einem Fluidsystem 10 für Gebäude oder Anlagen kann dies nachts erfolgen, wobei hier die Energiekosten für den von den Wärmepumpen 16, 28 und 30 benötigten Strom geringer sind als tagsüber. Die Pumpen 22 fördern dann weniger Fluid zu den Vorrichtungen 20, wobei die Kühlleistung der Vorrichtungen 20 beibehalten wird. Nach dem Herabsenken der Fluidtemperatur werden die Wärmepumpen 28 und/oder 30 abgeschaltet. Tagsüber erfolgt dann das Kühlen des Fluids für einen bestimmten Zeitraum nur durch eine Wärmepumpe 16, wobei höhere Kühlleistungen aufgrund bspw. höherer Außentemperaturen durch die in den Zuführleitungen 44, 58 und Rückführleitungen 46, 60 gespeicherte "Kälte" kompensiert werden können. Zudem kommt es zu einer Erhöhung des Anteils an kaltem Fluid in der hydraulischen Weiche 26. Die Fluidtemperatur zum Aktivieren mindestens einer zusätzliche Wärmepumpe 28, 30 wird erst später erreicht, da die Fluidtemperatur in der Zuführleitung 58 und der Rückführleitung 46 unter der regulären Fluidtemperatur liegt. Hierdurch können tagsüber die Energiekosten für den Strom zum Betrieb der Wärmepumpen 16, 28 und 30 reduziert werden.

Vorteilhafterweise kann durch die Regulierung des Massestromverhältnisses in der hydraulischen Weiche 26 ein häufiges Ein- und Ausschalten bzw. Zuschalten der Wärmepumpen 16, 28 und 30 vermieden werden. Ferner wird die Ausgleichspumpe 24 derart gesteuert, dass der Massestrom des Fluids im Verbraucherfluidkreislauf 14 konstant gehalten wird und das Massestromverhältnis in der hydraulischen Weiche 26 im Wesentlichen konstant bleibt. Durch das Konstanthalten des Massestroms im Verbraucherfluidkreislauf 14 wird die Regulierung des Massestromverhältnisses in der hydraulischen Weiche 26 vereinfacht bzw. erreicht.

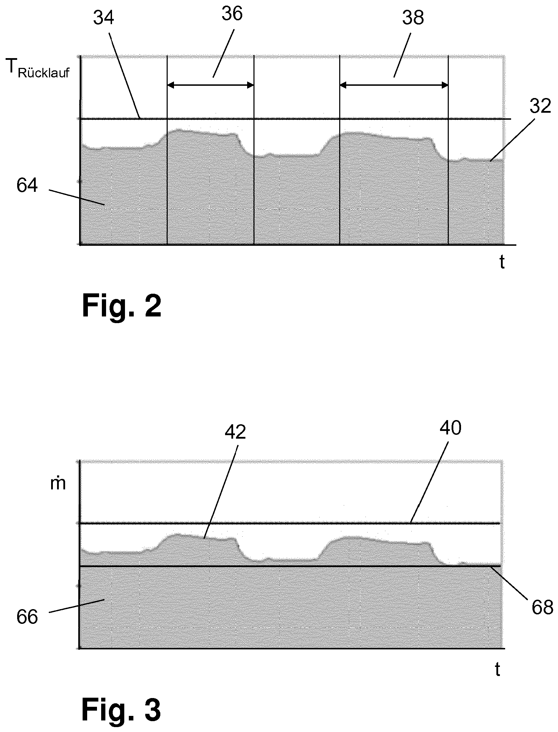

Fig. 2 zeigt den zeitlichen Verlauf der Rücklauftemperatur des Fluids in der Rückführleitung 60 und/oder der Zuführleitung 44. Der Temperaturverlauf 32 ist über einen bestimmten Zeitraum dargestellt, in dem in Abhängigkeit äußerer Einflüsse auf das Fluidsystem 10 und/oder eines höheren Kühlbedarfs der Kühlvorrichtungen 20 die Fluidtemperatur ansteigt. Die grau hinterlegte Fläche 64 repräsentiert die Fluidtemperatur unter dem Temperaturverlauf 32. In einem Bereich 36 ist die Rücklauftemperatur angestiegen, wodurch die zweite Wärmepumpe 28 zusätzlich zur ersten Wärmepumpe 16 aktiviert wird, um das Fluid zu kühlen. Nachdem die Fluidtemperatur gesunken ist, wird am Ende des Bereichs 36 die zweite Wärmepumpe 28 wieder ausgeschaltet. Anschließen bleibt die Temperatur im Wesentlichen konstant, bis die Temperatur kurz vor dem Bereich 38 wieder ansteigt. Im Bereich 38 wird die dritte Wärmepumpe 30 aktiviert, um das Fluid zusätzlich zur ersten Wärmepumpe 16 zu kühlen. Am Ende des Bereichs 38 sinkt die Fluidtemperatur wieder auf ihr vorheriges Niveau, wobei die dritte Wärmepumpe 32 ausgeschaltet wird.

Wie der schematischen Darstellung von Fig. 2 entnommen werden kann, werden die Wärmepumpen 28 und 30 dann zugeschaltet, wenn die Rücklauftemperatur des Fluids in der Rückführleitung 60 und/oder in der Zuführleitung 44 ansteigt. In einem ersten Bereich 36 wird die Wärmepumpe 28 zugeschaltet, da nur die Wärmepumpe 16 keine ausreichende Kühlung des Fluids bereitstellen kann. Nach dem Einschalten der Wärmepumpe 28 im Bereich 36 sinkt die Rücklauftemperatur des Fluids wieder, sodass die Wärmepumpe 28 ausgeschaltet wird. Anschließend bleibt die Rücklauftemperatur des Fluids im Wesentlichen konstant, bis diese, wie durch den Temperaturverlauf 32 dargestellt, wieder ansteigt. Hierzu wird in einem Bereich 38 die dritte Wärmepumpe 30 zugeschaltet, um ein zusätzliches Kühlen des Fluids zu erreichen. Nach einer bestimmten Zeit ist die Rücklauftemperatur des Fluids wieder gesunken und die dritte Wärmepumpe 30 wird abgeschaltet.

Das Ab- und Zuschalten der Wärmepumpen 28 und 30 kann auch anders als in Fig. 2 dargestellt erfolgen. Zudem können auch beide Wärmepumpen 28 und 30 gemeinsam zugeschaltet werden, wenn sich der Temperaturverlauf 32 der Linie 34 nähert bzw. diese überschritten hat. Die Linie 34 steht für eine maximal zulässige Rücklauftemperatur des Fluids. Über die Anstiegsfunktion der Rücklauftemperatur wird berechnet, welche Wärmepumpe 28, 30 zu- oder abgeschaltet wird. Ebenso kann ein Abschalten der Wärmepumpe 16 erfolgen, wenn ein Kühlbedarf bei den Kühlvorrichtungen 20 vorliegt oder der Kühlbedarf so gering ist, dass das Fluid für einen bestimmten Zeitraum keine Kühlung über die Wärmepumpen 16, 28 und 30 benötigt. Ist bspw. die Differenz der Fluidtemperatur zwischen dem Fluid in der Zuführleitung 58 und dem Fluid in der Rückführleitung 60 kleiner als ein Schwellenwert, der zum Aktivieren bzw. Einschalten der Wärmepumpen 16, 28 und 30 erforderlich ist, wird keine der Wärmepumpen 16, 28 und 30 betrieben. Zum Beispiel beträgt die Temperaturdifferenz weniger als 3 K bzw. °C.

Fig. 3 zeigt eine schematische Ansicht der Zusammensetzung des Soll-Massestroms im Verbraucherfluidkreislauf 14.

Die Ausgleichspumpe 24 wird so betrieben, dass sowohl der Massestrom im Verbraucherfluidkreislauf 14 konstant als auch der Massestrom im Erzeugerfluidkreislauf 12 größer als im Verbraucherfluidkreislauf 14 ist. Insbesondere wird die Ausgleichspumpe 24 so betrieben, dass diese Schwankungen in den Nebenfluidkreisläufen 62 mit den Pumpen 22 und Kühlvorrichtungen 20 ausgleicht.

Fig. 3 zeigt über die Linie 40 einen Soll-Massestrom, der im Verbraucherfluidkreislauf 14 konstant gehalten werden soll. Da die Masse- bzw. Volumenströme der Kühlvorrichtungen 20 variieren und durch die Pumpen 22 die Menge des Fluids in den Nebenfluidkreisläufen 62 schwankt, wird die Förderleistung der Ausgleichspumpe 24 an den Massestrom der Pumpen 22 angepasst. Der Verlauf 42 zeigt den Massestrom, der über die Pumpen 22 gefördert wird. Die grau hinterlegte Fläche 66 repräsentiert den Massestromanteil der Pumpen 22 an dem Gesamtmassestrom. Die Differenz zwischen dem Verlauf 42 und der Linie 40 repräsentiert den Anteil der Ausgleichspumpe 24 am Gesamtmassestrom im Verbraucherfluidkreislauf 14. Der Anteil der Ausgleichspumpe 24 variiert analog zu dem Anteil der Pumpen 22, wobei die Summe der Masseströme im Wesentlichen konstant gehalten wird, indem der durch die Ausgleichspumpe 24 geförderte Massestrom an den durch die Pumpen 22 geförderten Massestrom angepasst wird. Bei der Darstellung von Fig. 3 liegt der Anteil des Massestroms der Ausgleichspumpe 24 zwischen den Linien 40 und 68. Bspw. wird die Ausgleichspumpe 24 für das Fluidsystem 10 nach Maßgabe einer Berechnung für den Arbeitsbereich der Ausgleichspumpe 24 in Abhängigkeit des im Vorfeld ermittelten Massestromförderanteils ausgelegt und ausgewählt.

Bei dem vorstehend beschriebenen Fluidsystem 10 kann auf einfache Art und Weise das Takten (Ein- und Ausschalten) der Wärmepumpen 16, 28 und 30 verringert werden, indem das Massestromverhältnis von Erzeugerfluidkreislauf 12 zu Verbraucherfluidkreislauf 14 derart über die Ausgleichspumpe 24 geregelt wird, dass der Massestrom im Erzeugerfluidkreislauf 12 größer als im Verbraucherfluidkreislauf 14 ist. Zudem wird der Massestrom im Verbraucherfluidkreislauf 14 konstant gehalten, indem die Ausgleichspumpe 24 Schwankungen durch die Kühlvorrichtungen 20 ausgleicht. Kommt es zu einem Anstieg der Rücklauftemperatur des Fluids in der Zuführleitung 44 des Erzeugerfluidkreislaufs 12, werden die weiteren Wärmepumpen 28 und 30 in Abhängigkeit der Temperatur des Fluids zu- bzw. abgeschaltet. Bei dem Fluidsystem 10 wird zudem das Speichervolumen im Verbraucherfluidkreislauf 14 erhöht, weil der Massestrom im Erzeugerfluidkreislauf 12 größer als im Verbraucherfluidkreislauf 14 ist.

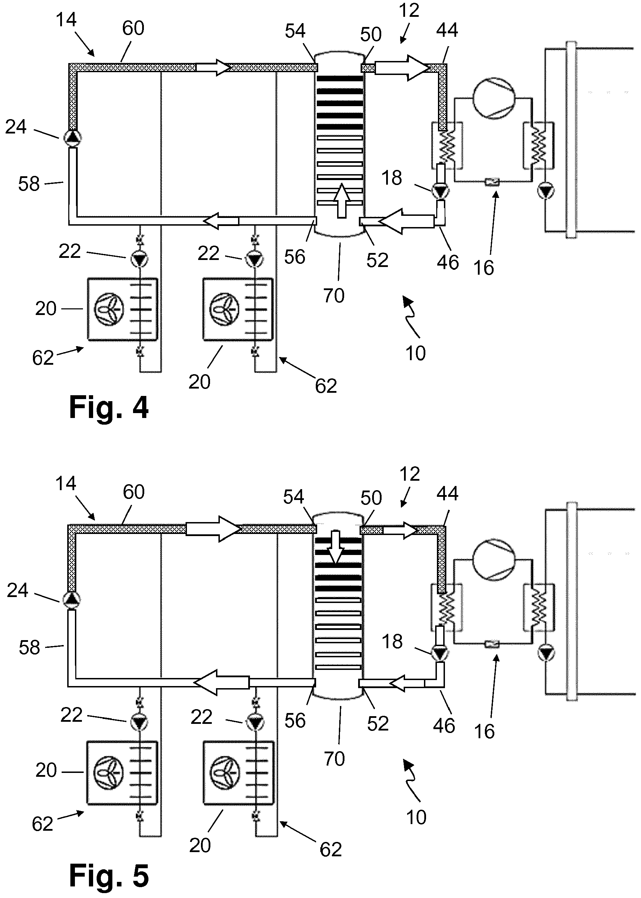

Die Fig. 4 und 5 zeigen eine schematische Darstellung eines Fluidsystems 10 mit einem hydraulischen Behälter 70 einer weiteren Ausführungsform. Der hydraulische Behälter 70 ist als hydraulischer Fluidspeicher ausgebildet und weist bspw. ein Fassungsvermögen von 1000 Litern auf. Der hydraulische Behälter 70 dient zugleich als Weiche und entkoppelt einen Verbraucherfluidkreislauf 14 von einem Erzeugerfluidkreislauf 12 des Fluidsystems 10. Hierzu ist der hydraulische Behälter 70 über einen Anschluss 50 mit einer Zuführleitung 44 des Erzeugerfluidkreislaufs 12 und über einen Anschluss 52 mit einer Rückführleitung 46 des Erzeugerfluidkreislaufs 12 verbunden. Ferner ist der hydraulische Behälter 70 über einen Anschluss 56 mit einer Zuführleitung 58 des Verbraucherfluidkreislaufs 14 und über einen Anschluss 54 mit einer Rückführleitung 60 des Verbraucherfluidkreislaufs 14 verbunden.

Die Regulierung des Massenstromverhältnisses zwischen Erzeugerfluidkreislauf 12 und Verbraucherfluidkreislauf 14 erfolgt ähnlich der Regulierung bei einem Fluidsystem 10 mit einer hydraulischen Weiche 26. Jedoch bietet der hydraulische Behälter 70 die Möglichkeit mehr "Kälte" zu speichern, da in dem hydraulischen Behälter 70 eine relativ große Menge an Fluid aufgenommen ist. Zusätzlich ermöglicht der hydraulische Behälter 70 eine Änderung des Massestromverhältnisses von Verbraucherfluidkreislauf 14 zu Erzeugerfluidkreislauf 12 auf beispielsweise 1 : 0,9. Bei einem Fluidsystem 10 mit einer hydraulischen Weiche 26 würde dies dazu führen, dass die Wärmepumpen 16, 28 und 30 nicht mehr ordnungsgemäß betrieben werden können, da die für den Betrieb der Wärmepumpen 16, 28 und 30 erforderliche Temperaturdifferenz zwischen der Rückführleitung 60 und der Zuführleitung 28 des Verbraucherfluidkreislaufs 14 unter eine erforderliche Mindesttemperaturdifferenz von bspw. 4 K fällt. Die Wärmepumpen 16, 28 und 30 würden dann entweder abgeschaltet werden oder unkontrollierbar takten.

Das Fluidsystem 10 der in den Fig. 4 und 5 gezeigten Ausführungsform ermöglicht jedoch auch eine Änderung des Massestromverhältnisses, wobei der Massestrom im Verbraucherfluidkreislauf 14 größer als im Erzeugerfluidkreislauf 12 ist, da die benötigte "Kälte" dem hydraulischen Behälter 70 entnommen werden kann. Bei einem hydraulischen Behälter 70 kommt es daher nicht zu einem Vermischen von kaltem Fluid aus der Rückführleitung 46 und warmen Fluid aus der Rückführleitung 60. Das zusätzliche Fluid wird dem als Speicher ausgebildeten hydraulischen Behälter 70 entnommen. In dem hydraulischen Behälter 70 stellt sich eine Schichtung des Fluids ein, wobei im unteren Bereich des hydraulischen Behälters 70, in etwa auf Höhe der Anschlüsse 52 und 56, das Fluid das gleiche Temperaturniveau aufweist wie in der Rückführleitung 46. Im oberen Bereich des hydraulischen Behälters 70, in etwa auf Höhe der Anschlüsse 54 und 50, weist das Fluid das gleiche Temperaturniveau auf, wie in der Rückführleitung 60. In Abhängigkeit der Beladung des hydraulischen Behälters 70 stellen sich zwischen dem oberen Bereich und dem unteren Bereich des hydraulischen Behälters 70 verschiedene Temperaturniveaus ein, wobei im beladenen Zustand des hydraulischen Behälters 70 überwiegend kaltes Fluid aufgenommen ist.

Fig. 4 zeigt schematisch einen Zustand, wobei der Massestrom im Erzeugerfluidkreislauf 12 größer als im Verbraucherfluidkreislauf 14 ist. Dies ist durch die Größe der Pfeile angedeutet, die für den Fluidstrom in der Zuführleitung 44, der Rückführleitung 46, der Zuführleitung 58 und der Rückführleitung 60 eingezeichnet sind. Die Rückführleitung 46 und die Zuführleitung 58 sind weiß dargestellt, da darin kaltes Fluid strömt. Die Rückführleitung 60 und die Zuführleitung 44 sind schraffiert dargestellt, da darin erwärmtes Fluid strömt. Es sei darauf hingewiesen, dass die Fluidtemperatur in den Leitungen nicht konstant sein muss, sondern insbesondere über die Länge der Leitungen in der Regel zunimmt. Grund hierfür sind bspw. Verluste aufgrund einer technisch nicht möglichen idealen Isolierung. Wenn der Massestrom im Erzeugerfluidkreislauf 12 größer als im Verbraucherfluidkreislauf 12 ist, strömt ein Teil des über die Rückführleitung 46 zugeführten Fluids in den hydraulischen Behälter 70, wodurch dieser beladen wird. Ebenso strömt wärmeres Fluid aus dem hydraulischen Behälter 70 in die Zuführleitung 44, da der Massestrom in der Rückführleitung 60 kleiner als in der Zuführleitung 44 ist.

Der Beladevorgang des hydraulischen Behälters 70 kann solange fortgeführt werden, bis der hydraulische Behälter 70 im Wesentlichen vollständig beladen ist, d.h. das in dem hydraulischen Behälter 70 aufgenommene Fluid das gleiche Temperaturniveaus wie das Fluid in der Rückführleitung 60 aufweist, wobei die Beladung des hydraulischen Behälters 70 Beschränkungen im Hinblick auf den Betrieb der Wärmepumpe 16 unterliegt. Dies bedeutet, dass die Wärmepumpe 16 abgeschaltet wird, wenn die Temperaturdifferenz zwischen der Rückführleitung 60 und der Zuführleitung 58 einen Grenzwert von bspw. 4 Kelvin unterschreitet.

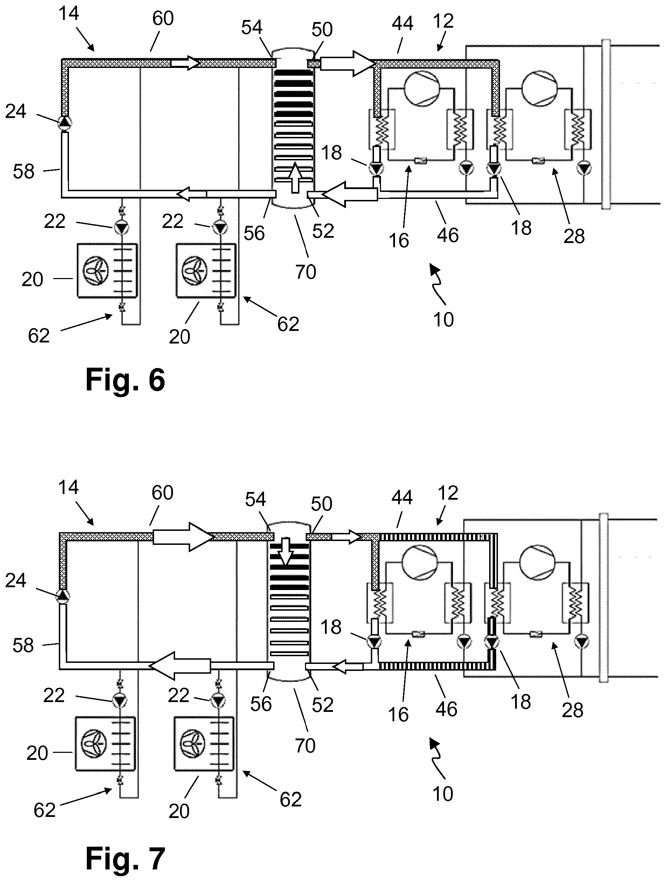

Fig. 5 zeigt einen Zustand in dem der Massestrom des Verbraucherfluidkreislaufs 14 größer als der Massestrom des Erzeugerfluidkreislaufs 12 ist. In diesem Zustand strömt kaltes Fluid aus dem hydraulischen Behälter 70 in die Zuführleitung 58, wobei erwärmtes Fluid aus der Rückführleitung 60 in den hydraulischen Behälter 70 strömt. Der hydraulische Behälter 70 wird dabei entladen. Das Entladen des hydraulischen Behälters 70 kann solange durchgeführt werden, bis das in dem hydraulischen Behälter 70 aufgenommene Fluid in unteren Bereich das gleiche Temperaturniveau aufweist wie das Fluid in der Rückführleitung 60. Dann muss der Massestrom im Verbraucherfluidkreislauf 14 reduziert oder der Massestrom im Erzeugerfluidkreislauf 12 erhöht werden, was bspw. durch das Zuschalten einer weiteren Wärmepumpe 28 erfolgen kann, wie in dem Ausführungsbeispiel der Fig. 6 und 7 gezeigt.

Die Fig. 6 und 7 zeigen eine schematische Darstellung eines Fluidsystems 10 mit einem hydraulischen Behälter 70 einer noch weiteren Ausführungsform, wobei im Gegensatz zu dem Fluidsystem 10 der Ausführungsform der Fig. 4 und 5 zusätzlich zu der Wärmepumpe 16 eine zweite Wärmepumpe 28 im Erzeugerfluidkreislauf 12 angeordnet ist. In weiteren nicht dargestellten Ausführungsformen sind zusätzlich noch weitere Wärmepumpen im Erzeugerfluidkreislauf 12 angeordnet.

Fig. 6 zeigt einen Zustand in dem beide Wärmepumpen 16 und 28 betrieben werden und der Massestrom im Erzeugerfluidkreislauf 12 größer als im Verbraucherfluidkreislauf 14 ist. Dabei wird der hydraulische Behälter 70 beladen, wie vorstehend bereits beschrieben.

Fig. 7 zeigt einen Zustand in dem nur die Wärmepumpe 16 in Betrieb ist und der Massestrom im Erzeugerfluidkreislauf 12 kleiner als im Verbraucherfluidkreislauf 14 ist. Die Leitungen zu und von der zweiten Wärmepumpe 28 sind in Fig. 7 liniert dargestellt, da die Wärmepumpe 28 nicht betrieben wird und daher kein Kühlen des Fluids bewirkt. In diesem Zustand wird der hydraulische Behälter 70 entladen und kaltes Fluid dem hydraulischen Behälter 70 entnommen. Ist der hydraulische Behälter 70 entladen, kann die zweite Wärmepumpe 28 wieder eingeschaltet werden, um den hydraulischen Behälter 70 zu beladen.

Das Beladen des hydraulischen Behälters 70 kann beispielsweise dann durchgeführt werden, wenn die Energiekosten für den Betrieb der Wärmepumpen 16, 28 und 30 gering sind. Dies ist in der Regel nachts der Fall. Dies ist ebenso dann der Fall, wenn von Einrichtungen Strom erzeugt wird, die in Abhängigkeit von Umwelteinflüssen (Sonne, Wind, etc.) Strom erzeugen. Steigt der Strompreis, kann der hydraulische Behälter 70 entladen werden, wobei dann bspw. nur eine Wärmepumpe 16 oder 28 betrieben wird oder sogar beide Wärmepumpen 16 und 28 ausgeschaltet werden können.

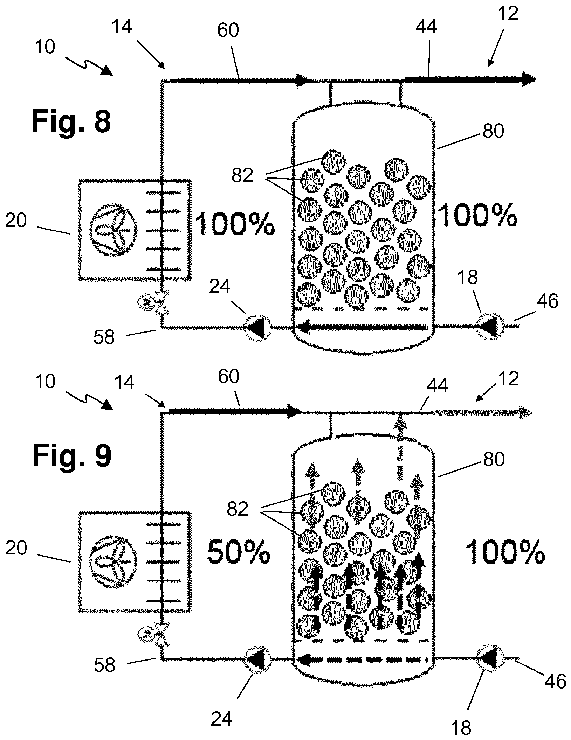

Die Fig. 8 und 9 zeigen schematische Darstellungen eines Fluidsystems 10 mit einem hydraulischen Behälter 80. Der hydraulische Behälter 80 ist mit Speicherelementen 82 gefüllt. Die Speicherelemente 82 sind mit einem Phasenwechselmaterial (PCM) gefüllt. Das Speichervermögen des hydraulischen Behälters 80 wird dadurch wesentlich erhöht. Zudem wird die Zerstörung der Schichtung des hydraulischen Behälters 80 reduziert bzw. ausgeschlossen. Selbst bei hohen Strömungsgeschwindigkeiten des Fluids, was bei hydraulischen Behältern 70 ohne Speicherelementen zu einer Vermischung des in dem hydraulischen Behälter 70 aufgenommenen Fluids führen kann, bleibt die Schichtung erhalten. Die Speicherelemente 82 weisen verschiedene Temperaturniveaus auf, wobei die Speicherelemente 82 im unteren Bereich des hydraulischen Behälters 80 in etwa das gleiche Temperaturniveau aufweisen wie das Fluid in der Rückführleitung 46. Die Speicherelemente 82 im oberen Bereich des hydraulischen Behälters 80 weisen in etwa das gleiche Temperaturniveau auf wie das Fluid in der Rückführleitung 60. Die Speicherelemente 82 sind in der in den Fig. 8 und 9 gezeigten Ausführungsform mit Wasser gefüllte Kugeln. Die Kugeln liegen aufeinander auf und aneinander an, wobei das Fluid zwischen den Speicherelementen 82 hindurchströmen kann. Die als Kugeln ausgebildeten Speicherelemente 82 können jedoch nicht verwirbelt werden und behalten ihre Position im hydraulischen Speicher 80 auch bei hohen Strömungsgeschwindigkeiten des Fluids bei.

Fig. 8 zeigt schematisch den Massestrom des Fluids durch den hydraulischen Behälter 80, wenn der Massestrom im Verbraucherfluidkreislauf 14 im Wesentlichen gleich groß ist wie im Erzeugerfluidkreislauf 12. Die Beladung des hydraulischen Behälters 80 wird dabei im Wesentlichen nicht verändert. Fig. 9 zeigt schematisch den Massestrom des Fluids durch den hydraulischen Behälter 80, wenn der Massestrom im Verbraucherfluidkreislauf 14 kleiner als im Erzeugerfluidkreislauf 12 ist, wobei kaltes Fluid den hydraulischen Behälter 80 durchströmt. Kaltes Fluid durchströmt den hydraulischen Behälter 80 von unten nach oben und nimmt Wärme von den Speicherelementen 82 auf, wobei die Speicherelemente 82 Wärme an das Fluid abgeben und dadurch gekühlt werden. Die Fluidtemperatur in der Zuführleitung 44 des Erzeugerfluidkreislaufs 12 setzt sich aus der Fluidtemperatur in der Rückführleitung 60 des Verbraucherfluidkreislaufs 14 und der Fluidtemperatur des Fluids im oberen Bereich des hydraulischen Behälters 80 in Abhängigkeit der Massenanteile zusammen.

Der Anteil von Fluid und Speicherelementen 82 im hydraulischen Behälter 80 kann in Abhängigkeit der Ausbildung der Speicherelemente 82 und der gewünschten Speicherkapazität des hydraulischen Behälters 80 vorgegeben werden. In der Regel sollte der Anteil der Speicherelemente 82 mindestens 50% betragen. Je größer der Anteil der Speicherelemente 82 ist, desto schneller kann eine Wärmeübertragung stattfinden, wobei die Speicherelemente 82 entweder Wärme an das Fluid abgeben oder Wärme von dem Fluid aufnehmen.

Die Befüllung des hydraulischen Behälters 80 mit PCM-Speicherelementen 82 ermöglicht gegenüber einem hydraulischen Behälter 70 ohne PCM-Speicherelementen 82, bei dem eine sofortige Abkühlung des Fluids aus der Rückführleitung 60 auf eine Mischtemperatur aus der Fluidtemperatur in der Rückführleitung 60 und der Fluidtemperatur im hydraulischen Behälter 70 erfolgt, eine verzögerte Abkühlung des Fluids aus der Rückführleitung auf eine Mischtemperatur aus der Fluidtemperatur in der Rückführleitung 60 und der Fluidtemperatur im hydraulischen Behälter 80, wobei das Fluid das durch den hydraulischen Behälter 80 strömt, erwärmt wird und die Rücklauftemperatur nicht zu stark herabgesetzt wird.

Bei einer Befüllung des hydraulischen Behälters 80 mit Phasenwechselmaterial (PCM) wird die mindestens eine Wärmepumpe im Erzeugerfluidkreislauf deutlich weniger takten. Insbesondere liegt der Vorteil eines hydraulischen Behälters 80 mit Speicherelementen 82 darin, dass die Fluidtemperatur im Rücklauf konstant gehalten werden kann.

Die Speicherkapazitäten eines hydraulischen Behälters 70 (Fig. 6 und 7) und eines hydraulischen Behälters 80 (Fig. 8 und 9) unterscheiden sich erheblich, wie der nachfolgenden Übersicht entnommen werden kann, wobei sich für die hydraulischen Behälter 70 und 80 bei einem Speichervolumen von 1000 Litern bei einer Absenkung der Fluidtemperatur um 3 K folgende Speicherkapazitäten ergeben:
Hydraulischer Behälter 70 ohne Speicherelemente (Anteil Fluid 100%) :

**Speicherkapazität**

| | |
|---|---|
| sensibel | 3 kWh |
| latent | 0 kWh |

hydraulischer Behälter 80 mit Speicherelementen (Anteil PCM 50% - Fluid 50%):

**Speicherkapazität**

| | |
|---|---|
| sensibel | 1,5 kWh |
| latent | 25 kWh |

Dabei wird von einem Wärmeübergang zwischen 40 und 60 kWh/m³ für die PCM-Speicherelemente 82 ausgegangen. In der Übersicht wurde ein Wert von 50 kWh/m³ angenommen. Wie dem Vergleich entnommen werden kann, ist die Speicherkapazität bei dem hydraulischen Behälter 80 aufgrund des latenten Speichervermögens durch das PCM in den Speicherelementen 82 gegenüber dem nur mit Fluid gefüllten hydraulischen Behälter 70 deutlich erhöht.

Die Speicherelemente 82 können auch mit Phasenwechselmaterialien gefüllt werden, die unterschiedliche Schmelztemperaturen aufweisen. Bspw. weist das Phasenwechselmaterial in den Speicherelementen 82 im unteren Bereich des hydraulischen Behälters 80 eine niedrigere Schmelztemperatur auf als das Phasenwechselmaterial in den Speicherelementen 82 im oberen Bereich des hydraulischen Behälters 80. Hierdurch kann die Wärmeübertragung weiter verbessert werden.

In weiteren nicht dargestellten Ausführungen weist der hydraulische Behälter 80 eine Strömungshaube auf, die im Wesentlichen kegelförmig ausgebildet ist und Strömungsöffnungen für das Fluid aufweist. Hierüber kann das Strömungsprofil im hydraulischen Behälter 80 weiter verbessert werden.

Eine weitere alternative Ausführung sieht vor, anstelle von Speicherelementen 82 Speicherplatten in einen hydraulischen Behälter einzusetzen, wobei die Speicherplatten ein PCM enthalten und Durchtrittsöffnungen für das Fluid aufweisen. Die Speicherplatten sind beabstandet und parallel zu einer Bodenfläche des hydraulischen Behälters angeordnet.

### Bezugszeichenliste

- 10: Fluidsystem
- 12: Erzeugerfluidkreislauf
- 14: Verbraucherfluidkreislauf
- 16: Wärmepumpe
- 18: Förderpumpe
- 20: Kühlvorrichtung
- 22: Pumpe
- 24: Ausgleichspumpe
- 26: hydraulische Weiche
- 28: Wärmepumpe
- 30: Wärmepumpe
- 32: Temperaturverlauf
- 34: Linie
- 36: Bereich
- 38: Bereich
- 40: Linie
- 42: Verlauf
- 44: Zuführleitung
- 46: Rückführleitung
- 48: Fluidkreis
- 50: Anschluss
- 52: Anschluss
- 54: Anschluss
- 56: Anschluss
- 58: Zuführleitung
- 60: Rückführleitung
- 62: Nebenfluidkreislauf
- 64: Fläche
- 66: Fläche
- 68: Linie
- 70: Behälter
- 80: Behälter
- 82: Speicherelement

## Patentansprüche

1. Verfahren zur Steuerung eines Fluidsystems (10), aufweisend einen Erzeugerfluidkreislauf (12) und einen Verbraucherfluidkreislauf (14), wobei zwischen dem Erzeugerfluidkreislauf (12) und dem Verbrauchfluidkreislauf (14) eine hydraulische Weiche (26) oder ein hydraulischer Behälter (70; 80) als Weiche angeordnet sind, wobei die hydraulische Weiche (26) oder der hydraulische Behälter (70; 80) mit einer Zuführleitung (44) und einer Rückleitung (46) des Erzeugerfluidkreislaufs (12) und einer Zuführleitung (58) und einer Rückführleitung (60) des Verbraucherfluidkreislaufs (14) verbunden sind, der Erzeugerfluidkreislauf (12) mindestens zwei Wärmepumpen (16; 28; 30) und mindestens eine Förderpumpe (18) aufweist, wobei die mindestens zwei Wärmepumpen (16; 28; 30) in parallelen Nebenkreisläufen in dem Erzeugerfluidkreislauf (12) angeordnet sind, wobei Zuführleitungen der Nebenkreisläufe des Erzeugerfluidkreislaufs (12) mit der Zuführleitung des Erzeugerfluidkreislaufs (12) und Rückführleitungen der Nebenkreisläufe mit der Rückführleitung des Erzeugerfluidkreislaufs (12) verbunden sind, und der Verbraucherfluidkreislauf (14) mehrere Kühlvorrichtungen (20), die in parallelen Nebenkreisläufen (62) mit jeweils einer den Kühlvorrichtungen (20) zugeordneten Pumpe (22) angeordnet sind, wobei Zuführleitungen der Nebenkreisläufe (62) des Verbraucherfluidkreislaufs (14) mit der Zuführleitung (58) des Verbraucherfluidkreislaufs (14) und Rückführleitungen der Nebenkreisläufe (62) mit der Rückführleitung (60) des Verbraucherfluidkreislaufs (14) verbunden sind, sowie mindestens eine Ausgleichspumpe (24) aufweist, wobei die mindestens eine Ausgleichspumpe (24) so gesteuert wird, dass der Massestrom des Verbraucherfluidkreislaufs (14) bei einer hydraulischen Weiche (26) oder bei einem hydraulischen Behälter (70; 80) im nicht vollständig beladenen Zustand des hydraulischen Behälters (70; 80) kleiner oder gleich dem Massestrom des Erzeugerfluidkreislaufs (12) ist und/oder das Massestromverhältnis zwischen dem Erzeugerfluidkreislauf (12) und dem Verbraucherfluidkreislauf (14) in der hydraulischen Weiche (26) oder in dem hydraulischen Behälter (70; 80) konstant gehalten wird.

2. Verfahren nach Anspruch 1, wobei die mindestens eine Ausgleichspumpe (24) so gesteuert wird, dass der Massestrom im Verbraucherfluidkreislauf (14) konstant gehalten wird.

3. Verfahren nach Anspruch 1 oder 2, wobei die mindestens eine Ausgleichspumpe (24) nach Maßgabe der mindestens einen Kühlvorrichtung (20) und/oder nach Maßgabe des Massestroms im Erzeugerfluidkreislauf (12) gesteuert wird.

4. Verfahren nach einem der Ansprüche 1 bis 3, wobei der Erzeugerfluidkreislauf (12) mindestens zwei Wärmepumpen (16; 28; 30) aufweist, die nach Maßgabe der Temperatur des Fluids im Erzeugerfluidkreislauf (12) und/oder im Verbraucherfluidkreislauf (14) gesteuert werden.

5. Verfahren nach einem der Ansprüche 1 bis 4, wobei das Massestromverhältnis in der hydraulischen Weiche (26) oder dem hydraulischen Behälter (70; 80) von Verbraucherfluidkreislauf (14) zu Erzeugerfluidkreislauf (12) auf 1:1-1,3 eingestellt wird und/oder in einem im Wesentlichen vollständig beladenen Zustand des hydraulischen Behälters (70; 80) das Massestromverhältnis von Verbraucherfluidkreislauf (14) zu Erzeugerfluidkreislauf (12) auf 1:0,9 eingestellt wird.

6. Fluidsystem, aufweisend einen Erzeugerfluidkreislauf (12) und einen Verbraucherfluidkreislauf (14), wobei
- zwischen dem Erzeugerfluidkreislauf (12) und dem Verbrauchfluidkreislauf (14) eine hydraulische Weiche (26) oder ein hydraulischer Behälter (70; 80) als Weiche angeordnet sind,
- die hydraulische Weiche (26) oder der hydraulische Behälter (70; 80) mit einer Zuführleitung (44) und einer Rückleitung (46) des Erzeugerfluidkreislaufs (12) und einer Zuführleitung (58) und einer Rückführleitung (60) des Verbraucherfluidkreislaufs (14) verbunden sind,
- der Erzeugerfluidkreislauf (12) mindestens zwei Wärmepumpen (16; 28; 30) und mindestens eine Förderpumpe (18) aufweist, wobei die mindestens zwei Wärmepumpen (16; 28; 30) in parallelen Nebenkreisläufen in dem Erzeugerfluidkreislauf (12) angeordnet sind, wobei Zuführleitungen der Nebenkreisläufe des Erzeugerfluidkreislaufs (12) mit der Zuführleitung des Erzeugerfluidkreislaufs (12) und Rückführleitungen der Nebenkreisläufe mit der Rückführleitung des Erzeugerfluidkreislaufs (12) verbunden sind,
- der Verbraucherfluidkreislauf (14) mehrere Kühlvorrichtungen (20), die in parallelen Nebenkreisläufen (62) mit jeweils einer den Kühlvorrichtungen (20) zugeordneten Pumpe (22) angeordnet sind, wobei Zuführleitungen der Nebenkreisläufe (62) des Verbraucherfluidkreislaufs (14) mit der Zuführleitung (58) des Verbraucherfluidkreislaufs (14) und Rückführleitungen der Nebenkreisläufe (62) mit der Rückführleitung (60) des Verbraucherfluidkreislaufs (14) verbunden sind, und mindestens eine Ausgleichspumpe (24) aufweist, und
- die mindestens eine Ausgleichspumpe (24) derart steuerbar ist, dass der Massestrom des Verbraucherfluidkreislaufs (14) bei einer hydraulischen Weiche (26) oder bei einem hydraulischen Behälter (70; 80) im nicht vollständig beladenen Zustand des hydraulischen Behälters (70; 80) kleiner oder gleich dem Massestrom des Erzeugerfluidkreislaufs (12) und/oder das Massestromverhältnis zwischen dem Erzeugerfluidkreislauf (12) und dem Verbraucherfluidkreislauf (14) in der hydraulischen Weiche (26) oder in dem hydraulischen Behälter (70; 80) konstant sind.

7. Fluidsystem nach Anspruch 6, wobei in dem Fluidsystem (10) ein Kältemittel aufgenommen ist.

8. Fluidsystem nach einem der Ansprüche 6 bis 7 wobei die mindestens eine Ausgleichspumpe (24), die mindestens eine Förderpumpe (18) und/oder die mindestens eine Pumpe (22) drehzahlgesteuerte Pumpen sind.

9. Fluidsystem nach einem der Ansprüche 6 bis 8, wobei mindestens in der
- Rückführleitung (60) des Verbraucherfluidkreislaufs (14),
- Zuführleitung (58) des Verbraucherfluidkreislaufs (14),
- Rückführleitung (46) des Erzeugerfluidkreislaufs (12), und/oder
- Zuführleitung (44) des Erzeugerfluidkreislaufs (12), mindestens eine Temperaturerfassungseinrichtung angeordnet ist.

10. Fluidsystem nach einem der Ansprüche 6 bis 9, wobei der hydraulische Behälter (70; 80) als Fluidspeicher ausgebildet ist.

11. Fluidsystem nach Anspruch 10, wobei in dem Fluidspeicher Speicherelemente (82) zur Aufnahme von Wärme oder zur Abgabe von Wärme aufgenommen sind.

## Claims

1. Method for controlling a fluid system (10) comprising a generator fluid circuit (12) and a consumer fluid circuit (14), wherein a hydraulic separator (26) or a hydraulic reservoir (70; 80) are arranged between the generator fluid circuit (12) and the consumer fluid circuit (14) as a separator, wherein the hydraulic separator (26) or the hydraulic reservoir (70; 80) are connected to a supply line (44) and a return line (46) of the generator fluid circuit (12) and a supply line (58) and a return line (60) of the consumer fluid circuit (14), the generator fluid circuit (12) comprises at least two heat pumps (16; 28; 30) and at least one conveyor pump (18), wherein the at least two heat pumps (16; 28; 30) are arranged in parallel secondary circuits in the generator fluid circuit (12), wherein supply lines of the secondary circuits of the generator fluid circuit (12) are connected to the supply line of the generator fluid circuit (12) and return lines of the secondary circuits are connected to the return line of the generator fluid circuit (12), and the consumer fluid circuit (14) comprises a plurality of cooling devices (20), which are arranged in parallel secondary circuits (62) each having a pump (22) associated with the cooling devices (20), wherein supply lines of the secondary circuits (62) of the consumer fluid circuit (14) are connected to the supply line (58) of the consumer fluid circuit (14) and return lines of the secondary circuits (62) are connected to the return line (60) of the consumer fluid circuit (14), and at least one compensation pump (24), wherein the at least one compensation pump (24) is controlled such that the mass flow of the consumer fluid circuit (14) in a hydraulic separator (26) or in a hydraulic reservoir (70; 80) is less than or equal to the mass flow of the generator fluid circuit (12) when the hydraulic reservoir (70; 80) is not fully loaded and/or the mass flow ratio between the generator fluid circuit (12) and the consumer fluid circuit (14) in the hydraulic separator (26) or in the hydraulic reservoir (70; 80) is kept constant.

2. Method according to claim 1, wherein the at least one compensation pump (24) is controlled such that the mass flow in the consumer fluid circuit (14) is kept constant.

3. Method according to claim 1 or 2, wherein the at least one compensation pump (24) is controlled according to the at least one cooling device (20) and/or according to the mass flow in the generator fluid circuit (12).

4. Method according to one of the claims 1 to 3, wherein the generator fluid circuit (12) comprises at least two heat pumps (16; 28; 30), which are controlled according to the temperature of the fluid in the generator fluid circuit (12) and/or in the consumer fluid circuit (14).

5. Method according to one of the claims 1 to 4, wherein the mass flow ratio in the hydraulic separator (26) or the hydraulic reservoir (70; 80) from the consumer fluid circuit (14) to the producer fluid circuit (12) is set to 1:1-1.3 and/or in a substantially fully loaded state of the hydraulic reservoir (70; 80) the mass flow ratio from the consumer fluid circuit (14) to the producer fluid circuit (12) is set to 1:0.9.

6. Fluid system comprising a generator fluid circuit (12) and a consumer fluid circuit (14), wherein
- a hydraulic separator (26) or a hydraulic reservoir (70; 80) is arranged as a separator between the generator fluid circuit (12) and the consumer fluid circuit (14),
- the hydraulic separator (26) or the hydraulic reservoir (70; 80) are connected to a supply line (44) and a return line (46) of the generator fluid circuit (12) and a supply line (58) and a return line (60) of the consumer fluid circuit (14),
- the generator fluid circuit (12) comprises at least two heat pumps (16; 28; 30) and at least one conveyor pump (18), wherein the at least two heat pumps (16; 28; 30) are arranged in parallel secondary circuits in the generator fluid circuit (12), wherein supply lines of the secondary circuits of the generator fluid circuit (12) are connected to the supply line of the generator fluid circuit (12) and return lines of the secondary circuits are connected to the return line of the generator fluid circuit (12),
- and the consumer fluid circuit (14) comprises a plurality of cooling devices (20), which are arranged in parallel secondary circuits (62) each having a pump (22) associated with the cooling devices (20), wherein supply lines of the secondary circuits (62) of the consumer fluid circuit (14) are connected to the supply line (58) of the consumer fluid circuit (14) and return lines of the secondary circuits (62) are connected to the return line (60) of the consumer fluid circuit (14), and at least one compensation pump (24), and
- at least one compensating pump (24) is controllable in such a way that the mass flow of the consumer fluid circuit (14) in a hydraulic separator (26) or in a hydraulic reservoir (70; 80) is smaller than or equal to the mass flow of the generator fluid circuit (12) when the hydraulic reservoir (70; 80) is not fully loaded and/or the mass flow ratio between the generator fluid circuit (12) and the consumer fluid circuit (14) is constant in the hydraulic separator (26) or in the hydraulic reservoir (70; 80).

7. Fluid system according to claim 6, wherein a refrigerant is received in the fluid system (10).

8. Fluid system according to one of the claims 6 to 7, wherein the at least one compensation pump (24), the at least one conveyor pump (18) and/or the at least on pump (22) are speed-controlled pumps.

9. Fluid system according to one of the claims 6 to 8, wherein at least one temperature detection device is arranged at least in the
- return line (60) of the consumer fluid circuit (14),
- supply line (58) of the consumer fluid circuit (14),
- return line (46) of the generator fluid circuit (12), and/or
- supply line (44) of the generator fluid circuit (12).

10. Fluid system according to one of the claims 6 to 9, wherein the hydraulic reservoir (70; 80) is designed as a fluid reservoir.

11. Fluid system according to claim 10, wherein accumulator elements (82) for absorbing heat or for releasing heat are incorporated in the fluid reservoir.

## Revendications

1. Procédé de commande d'un système fluidique (10), présentant un circuit de fluide générateur (12) et un circuit de fluide consommateur (14), dans lequel un séparateur hydraulique (26) ou un réservoir hydraulique (70 ; 80) en tant que séparateur sont disposés entre le circuit de fluide générateur (12) et le circuit de fluide consommateur (14), dans lequel le séparateur hydraulique (26) ou le réservoir hydraulique (70 ; 80) sont reliés à une conduite d'amenée (44) et une conduite de retour (46) du circuit de fluide générateur (12) et une conduite d'amenée (58) et une conduite de retour (60) du circuit de fluide consommateur (14), le circuit de fluide générateur (12) présente au moins deux pompes à chaleur (16 ; 28 ; 30) et au moins une pompe de refoulement (18), dans lequel les au moins deux pompes à chaleur (16 ; 28 ; 30) sont disposées dans des circuits secondaires parallèles dans le circuit de fluide générateur (12), dans lequel les conduites d'amenée des circuits secondaires du circuit de fluide générateur (12) sont reliées à la conduite d'amenée du circuit de fluide générateur (12) et les conduites de retour des circuits secondaires à la conduite de retour du circuit de fluide générateur (12), et le circuit de fluide consommateur (14) présente plusieurs dispositifs de refroidissement (20), qui sont disposés dans des circuits secondaires (62) parallèles avec respectivement une pompe (22) associée aux dispositifs de refroidissement (20), dans lequel les conduites d'amenée des circuits secondaires (62) du circuit de fluide consommateur (14) sont reliées à la conduite d'amenée (58) du circuit de fluide consommateur (14) et les conduites de retour des circuits secondaires (62) à la conduite de retour (60) du circuit de fluide consommateur (14), ainsi qu'au moins une pompe de compensation (24), dans lequel la au moins une pompe de compensation (24) est commandée de sorte que le débit massique du circuit de fluide consommateur (14), pour un séparateur hydraulique (26) ou pour un réservoir hydraulique (70 ; 80), dans l'état non entièrement chargé du réservoir hydraulique (70 ; 80), est inférieur ou égal au débit massique du circuit de fluide générateur (12) et/ou le rapport de débit massique entre le circuit de fluide générateur (12) et le circuit de fluide consommateur (14) dans le séparateur hydraulique (26) ou dans le réservoir hydraulique (70 ; 80) est maintenu constant.

2. Procédé selon la revendication 1, dans lequel la au moins une pompe de compensation (24) est commandée de sorte que le débit massique dans le circuit de fluide consommateur (14) est maintenu constant.

3. Procédé selon la revendication 1 ou 2, dans lequel la au moins une pompe de compensation (24) est commandée en fonction du au moins un dispositif de refroidissement (20) et/ou en fonction du débit massique dans le circuit de fluide générateur (12).

4. Procédé selon l'une quelconque des revendications 1 à 3, dans lequel le circuit de fluide générateur (12) présente au moins deux pompes à chaleur (16 ; 28 ; 30), qui sont commandées en fonction de la température du fluide dans le circuit de fluide générateur (12) et/ou dans le circuit de fluide consommateur (14).

5. Procédé selon l'une quelconque des revendications 1 à 4, dans lequel le rapport de débit massique dans le séparateur hydraulique (26) ou le réservoir hydraulique (70 ; 80) du circuit de fluide consommateur (14) au circuit de fluide générateur (12) est réglé sur 1 : 1-1,3 et/ou, dans un état sensiblement entièrement chargé du réservoir hydraulique (70 ; 80), le rapport de débit massique du circuit de fluide consommateur (14) au circuit de fluide générateur (12) est réglé sur 1 : 0,9.

6. Système fluidique, présentant un circuit de fluide générateur (12) et un circuit de fluide consommateur (14), dans lequel
- un séparateur hydraulique (26) ou un réservoir hydraulique (70 ; 80) en tant que séparateur sont disposés entre le circuit de fluide générateur (12) et le circuit de fluide consommateur (14),
- le séparateur hydraulique (26) ou le réservoir hydraulique (70 ; 80) sont reliés à une conduite d'amenée (44) et une conduite de retour (46) du circuit de fluide générateur (12) et une conduite d'amenée (58) et une conduite de retour (60) du circuit de fluide consommateur (14),
- le circuit de fluide générateur (12) présente au moins deux pompes à chaleur (16 ; 28 ; 30) et au moins une pompe de refoulement (18), dans lequel les au moins deux pompes à chaleur (16 ; 28 ; 30) sont disposées dans des circuits secondaires parallèles dans le circuit de fluide générateur (12), dans lequel les conduites d'amenée des circuits secondaires du circuit de fluide générateur (12) sont reliées à la conduite d'amenée du circuit de fluide générateur (12) et les conduites de retour des circuits secondaires à la conduite de retour du circuit de fluide générateur (12),
- le circuit de fluide consommateur (14) présente plusieurs dispositifs de refroidissement (20), qui sont disposés dans des circuits secondaires (62) parallèles avec respectivement une pompe (22) associée aux dispositifs de refroidissement (20), dans lequel les conduites d'amenée des circuits secondaires (62) du circuit de fluide consommateur (14) sont reliées à la conduite d'amenée (58) du circuit de fluide consommateur (14) et les conduites de retour des circuits secondaires (62) à la conduite de retour (60) du circuit de fluide consommateur (14), et au moins une pompe de compensation (24), et
- la au moins une pompe de compensation (24) est commandée de telle sorte que le débit massique du circuit de fluide consommateur (14), pour un séparateur hydraulique (26) ou pour un réservoir hydraulique (70 ; 80), dans l'état non entièrement chargé du réservoir hydraulique (70 ; 80), est inférieur ou égal au débit massique du circuit de fluide générateur (12) et/ou le rapport de débit massique entre le circuit de fluide générateur (12) et le circuit de fluide consommateur (14) dans le séparateur hydraulique (26) ou dans le réservoir hydraulique (70 ; 80) sont constants.

7. Système fluidique selon la revendication 6, dans lequel un réfrigérant est logé dans le système fluidique (10).

8. Système fluidique selon l'une quelconque des revendications 6 à 7, dans lequel la au moins une pompe de compensation (24), la au moins une pompe de refoulement (18) et/ou la au moins une pompe (22) sont des pompes à vitesse de rotation commandée.

9. Système fluidique selon l'une quelconque des revendications 6 à 8, dans lequel au moins un dispositif de détection de température est disposé au moins dans la
- conduite de retour (60) du circuit de fluide consommateur (14),
- conduite d'amenée (58) du circuit de fluide consommateur (14),
- conduite de retour (46) du circuit de fluide générateur (12), et/ou
- conduite d'amenée (44) du circuit de fluide générateur (12).

10. Système fluidique selon l'une quelconque des revendications 6 à 9, dans lequel le réservoir hydraulique (70 ; 80) est réalisé sous la forme d'un accumulateur de fluide.

11. Système fluidique selon la revendication 10, dans lequel des éléments accumulateurs (82) destinés à absorber de la chaleur ou à dissiper de la chaleur sont logés dans l'accumulateur de fluide.
